# EUROPÄISCHE PATENTANMELDUNG

(11) **EP 4 778 406 A1**
(43) Veröffentlichungstag der Anmeldung: **22.07.2026**
(21) Anmeldenummer: 26151800.5
(22) Anmeldetag: 14.01.2026
(51) Int. Cl.: A24C 5/01, A24C 5/34, G01N 21/952, A24D 3/02

(54) **MESSANORDNUNG UND VERFAHREN ZUM MESSEN VON SEGMENTEN EINES STABFÖRMIGEN ARTIKELS DER TABAKVERARBEITENDEN INDUSTRIE**

(30) Priorität: 15.01.2025 DE 102025101248
(71) Anmelder: Körber Technologies GmbH, 21033 Hamburg (DE)
(72) Erfinder: Rehn, Henning, 21077 Hamburg (DE); Ülcetin, Onur, 28307 Bremen (DE); Lux, Christian, 21035 Hamburg, DE (DE); Vogelsang, Kai, 21391 Reppenstedt (DE); Junge, Christian, 21039 Escheburg (DE); Gast, Hanno, 21256 Handeloh (DE)
(74) Vertreter: Eisenführ Speiser

(57) **Zusammenfassung**

Die Erfindung betrifft eine Messanordnung (10) und ein Verfahren zum Messen eines Segmentübergangs (U1, U2, U3) und/oder einer Länge (L1, L2, L3, L4) eines Segments (S1, S2, S3, S4) und/oder eines Vorhandenseins eines Segments (S1, S2, S3, S4) eines stabförmigen Artikels (A) der tabakverarbeitenden Industrie, der mehrere entlang seiner Längsachse (L) nebeneinander angeordnete Segmente (S1, S2, S3, S4) aufweist. Die Messanordnung (10) umfasst eine Fördertrommel (20) zum queraxialen Fördern von stabförmigen Artikeln (A) und eine Beleuchtungsvorrichtung (30) mit mehreren Beleuchtungsquellen (31), die Licht auf eine Mantelfläche (M) des in dem Aufnahmebereich (21) gehaltenen stabförmigen Artikels (A) in radialer Richtung (AR) des stabförmigen Artikels (A) durch den stabförmigen Artikel hindurchsenden. Mindestens eine der Beleuchtungsquellen (31) sendet monochromatisches oder nahezu monochromatisches und/oder farbiges Licht oder dichromatisches oder nahezu dichromatisches und/oder farbiges Licht aus. Die Messanordnung umfasst eine Bilderfassungsvorrichtung (40), um ein Bild von der Mantelfläche (M) eines stabförmigen Artikels (A) aufzunehmen. Die Messanordnung umfasst eine Bildverarbeitungseinheit (50), mit der das mittels der Bilderfassungsvorrichtung (40) aufgenommene Bild in Abhängigkeit von dem aus dem stabförmigen Artikel (A) austretenden Licht ausgewertet wird und mit der ein Segmentübergang (U1, U2, U3) und/oder eine Länge (L1, L2, L3, L4) eines Segments (S1, S2, S3, S4) und/oder ein Vorhandensein eines Segments (S1, S2, S3, S4) eines stabförmigen Artikels (A) ermittelt wird.

## Beschreibung

Die Erfindung betrifft eine Messanordnung und ein Verfahren zum Messen eines Segmentübergangs und/oder einer Länge eines Segments und/oder eines Vorhandenseins eines Segments eines stabförmigen Artikels der tabakverarbeitenden Industrie.

Stabförmige Artikel der Tabak verarbeitenden Industrie, die eine Zusammenstellung aus mehreren Segmenten sind, sind beispielsweise als Multisegmentfilter bekannt. Eine Maschine zur Herstellung und ein Verfahren zum Herstellen von Multisegmentfiltern ist beispielsweise aus WO 03/024256 A2 sowie aus DE 102009041319 A1 bekannt.

Bei der Zusammenstellung der Filtersegmente können Fehler auftreten, beispielsweise kann ein Vertauschen von Filtersegmenten, ein Fehlen eines Filtersegments, eine falsche Position oder ein Einfügen eines Filtersegments mit der falschen Länge erfolgen. Ferner können Lücken zwischen den Filtersegmenten auftreten oder die Filtersegmente können gegeneinander verkippt sein. Außerdem können die Längen der Filtersegmente von den Solllängen abweichen.

Für die Qualitätsüberwachung bei der Herstellung von solchen stabförmigen Artikeln werden vielfach Kamerasysteme eingesetzt. Dabei werden üblicherweise Bilder von der Produktoberfläche aufgenommen. In einer Auswerteeinheit werden diese analysiert und beispielsweise auf Störstellen, wie z.B. dunkle Flecken oder dergleichen, geprüft. Über ein Schussventil können stabförmige Artikel, welche dieser Qualitätsprüfung nicht standhalten, aus der laufenden Produktion entfernt werden.

Aus DE 102014209000 A1 ist ein Verfahren zur optischen Prüfung von stabförmigen Artikeln der Tabak verarbeitenden Industrie bekannt. Bei diesem Verfahren werden die stabförmigen Artikel, beispielsweise Zigaretten, Filterstäbe oder Filterzigaretten, von mehreren Lichtquellen während einer queraxialen Förderung auf einer Fördertrommel unter verschiedenen Beleuchtungswinkeln beleuchtet. Die einzelnen Lichtquellen werden in einer vorbestimmten Reihenfolge nacheinander für eine vorgegebene Zeitdauer eingeschaltet. Dieses Verfahren dient der Oberflächenprüfung der stabförmigen Artikel.

Aus DE 1532119 A1 ist eine Vorrichtung zur Prüfung von Filtermaterial im Bereich einer Fördertrommel bekannt, in deren Mantelflache Mulden zur Aufnahme von Filterstaben ausgebildet sind. Die Mulden erstrecken sich in axialer Richtung, verlaufen also parallel zur Mittel- bzw. Rotationsachse der Fördertrommel und sind in Dreh- bzw. Umfangsrichtung der Fördertrommel nebeneinanderliegend über den gesamten Umfang der Fördertrommel angeordnet. Solche Fördertrommeln werden auch als Muldentrommeln bezeichnet. Im Boden der Mulden ist ein Schlitz ausgebildet, der die Mulde mit dem Innenraum der Fördertrommel verbindet. Innerhalb der Fördertrommel ist eine Lichtquelle angeordnet, die die Schlitze bestrahlt und deren Lichtstrahlen somit durch die Schlitze austreten. Außerhalb der Fördertrommel ist eine Fotozelle stationär angeordnet, die jeweils die durch einen Schlitz aus der Fördertrommel austretenden Lichtstrahlen zur Ermittlung der Position des in der zugehörigen Mulde aufgenommenen Filterstabes oder -stöpsels erfasst. Da sich die Fördertrommel mit ihrer Mantelflache an der Fotozelle vorbeibewegt, werden auf diese Weise nacheinander die Filterstäbe in den Mulden erfasst. Eine ähnliche Vorrichtung ist auch aus US 3040179 A bekannt.

Aus EP 1463421 B9 ist eine Einrichtung zum Messen von Eigenschaften von Multisegmentfiltern im Durchstrahlverfahren unter Verwendung einer Strahlungsquelle und eines Strahlungsempfängers bekannt. Die Strahlungsquelle ist radial außerhalb einer Fördertrommel stationär angeordnet und so ausgebildet, dass eine längsaxial gleichmäßige Bestrahlung eines Multisegmentfilters möglich ist. Auch hier ist die Fördertrommel als Muldentrommel ausgebildet, wobei die Mulden an ihrem Boden mit Öffnungen in den Innenraum der Fördertrommel versehen sind. Im Inneren der Fördertrommel ist ein Strahlungsempfänger angeordnet, der die von der Strahlungsquelle erzeugte Strahlung erfasst, die durch die Öffnungen in den Mulden in das Innere der Fördertrommel gelangt.

Aus WO 2023/285634 A1 ist es bekannt, Multisegmentstäbe in axialer Richtung zu beleuchten und mittels einer Kamera Bilder der beleuchteten Multisegmentstäbe aufzunehmen.

Aus WO 2017/221126 A1 ist eine Transfer- und Inspektionseinheit für eine Gruppe länglicher Elemente wie Zigaretten bekannt, die mit einer Achse parallel zu derjenigen der Zigaretten von beiden Enden aus beleuchtet werden und in einem schrägen Winkel abgebildet werden, um das Abtasten der Oberfläche zu erleichtern.

Aus EP 3654275 B1 ist ein Messsystem bekannt, bei dem zwei Beleuchtungsvorrichtungen Lichtstrahlen in Längsrichtung eines stabförmigen Mehrsegmentgegenstands erzeugen und bei dem außerdem eine Beleuchtungsvorrichtung Lichtstrahlen quer zur Längsrichtung des stabförmigen Mehrsegmentgegenstands erzeugt.

Aus DE 102018100499 A1 ist eine Vorrichtung bekannt, mit der stabförmige Artikel in Mulden queraxial gefördert werden und mittels einer Beleuchtungsvorrichtung beleuchtet werden. Mittels einer Bilderfassungsvorrichtung können Bilder der im Durchlicht beleuchteten stabförmigen Artikel aufgenommen werden, um dann eine Qualitätsprüfung durchzuführen.

Aus DE102014209000 A1 ist ein optisches Prüfen der Oberflächen von stabförmigen Artikeln bekannt. Dabei sind mehrere Lichtquellen, die die Oberflächen der stabförmigen Artikel beleuchten, und eine Bilderfassungsvorrichtung vorgesehen. Die Lichtquellen werden dabei derart gesteuert, dass sie in einer vorbestimmten Reihenfolge und für eine vorgegebene Zeitdauer eingeschaltet werden.

Bei bekannten Lösungen besteht das Problem, dass die Messungen der stabförmigen Artikel, insbesondere die Messungen der Segmente von stabförmigen Artikeln, nicht zuverlässig und/oder nicht genau genug erfolgen.

Der Erfindung liegt daher die Aufgabe zugrunde, eine verbesserte Lösung bereitzustellen, welche die genannten Probleme adressiert. Insbesondere ist es Aufgabe der vorliegenden Erfindung, eine Lösung bereitzustellen, die eine zuverlässigere und genauere Analyse von stabförmigen Artikeln der tabakverarbeitenden Industrie mit mehreren Segmenten ermöglicht.

Gemäß einem ersten Aspekt der vorliegenden Erfindung wird die Aufgabe gelöst durch eine Messanordnung nach Anspruch 1. Demnach ist vorgesehen eine Messanordnung zum Messen eines Segmentübergangs und/oder einer Länge eines Segments und/oder eines Vorhandenseins eines Segments eines stabförmigen Artikels der tabakverarbeitenden Industrie, der eine Längsachse und mehrere, vorzugsweise mindestens drei oder mindestens vier oder mindestens sieben, entlang der Längsachse des stabförmigen Artikels nebeneinander angeordnete Segmente aufweist. Die Messanordnung umfasst eine um eine Rotationsachse drehbar gelagerte Fördertrommel, die zum queraxialen Fördern von stabförmigen Artikeln ausgebildet ist, wobei die Fördertrommel einen Aufnahmebereich aufweist, der zum Halten eines stabförmigen Artikels ausgebildet ist. Die Messanordnung umfasst ferner eine Beleuchtungsvorrichtung, umfassend mehrere Beleuchtungsquellen, die ausgebildet und angeordnet sind, um Licht auf eine Mantelfläche eines in dem Aufnahmebereich gehaltenen stabförmigen Artikels in radialer Richtung des stabförmigen Artikels durch den stabförmigen Artikel hindurchzusenden, wobei mindestens eine der Beleuchtungsquellen ausgebildet ist, um monochromatisches oder nahezu monochromatisches und/oder farbiges Licht oder dichromatisches oder nahezu dichromatisches und/oder farbiges Licht auszusenden. Die Messanordnung umfasst außerdem eine Bilderfassungsvorrichtung, die von der Fördertrommel beabstandet angeordnet ist und die ausgebildet und angeordnet ist, um ein Bild von der Mantelfläche eines in dem Aufnahmebereich angeordneten stabförmigen Artikels aufzunehmen, die mittels der Beleuchtungsquellen durch den stabförmigen Artikel gesendeten Lichts durchleuchtet wird. Die Messanordnung umfasst des Weiteren eine Bildverarbeitungseinheit, die signaltechnisch mit der Bilderfassungsvorrichtung verbunden ist und die ausgebildet ist, um das mittels der Bilderfassungsvorrichtung aufgenommene Bild in Abhängigkeit von dem aus dem stabförmigen Artikel austretenden Licht auszuwerten und einen Segmentübergang und/oder eine Länge eines Segments und/oder ein Vorhandensein eines Segments eines stabförmigen Artikels zu ermitteln.

Ein Vorteil einer solchen Messanordnung besteht darin, dass aufgrund der Verwendung von monochromatischem oder nahezu monochromatischem und/oder farbigem Licht oder dichromatischem oder nahezu dichromatischem und/oder farbigem Licht eine besonders zuverlässige und genaue Analyse der Segmente eines stabförmigen Artikels möglich ist.

Insbesondere kann ein Segmentübergang und/oder eine Länge eines Segments und/oder ein Vorhandensein eines Segments eines stabförmigen Artikels auf diese Weise besonders zuverlässig und genau ermittelt werden.

Unter stabförmigen Artikeln der Tabak verarbeitenden Industrie sind insbesondere Filterstabe, Multisegmentfilterstabe und Tabakstocke sowie daraus hergestellte Filterzigaretten zu verstehen. Aber auch andere Artikel der Tabak verarbeitenden Industrie, wie beispielsweise filterlose Zigaretten, Zigarillos und dergleichen können im hier vorliegenden Zusammenhang unter stabförmigen Artikeln der Tabak verarbeitenden Industrie verstanden werden.

Der stabförmige Artikel kann insbesondere ein Endprodukt oder ein Zwischenprodukt sein. Als Endprodukt kann der stabförmige Artikel insbesondere ein stabförmiger Artikel für erhitzte Tabakerzeugnisse (sogenannte "heated tobacco products", HTP) oder eine Multisegmentzigarette sein. Als Zwischenprodukt kann der stabförmige Artikel insbesondere ein Multifiltersegment sein.

Der stabförmige Artikel weist vorzugsweise mindestens drei, besonders bevorzugt mindestens vier, insbesondere fünf, weiter bevorzugt mindestens sieben, nebeneinander angeordnete Segmente auf. Der stabförmige Artikel umfasst vorzugsweise mindestens ein vorderes Segment und ein hinteres Segment und vorzugsweise mindestens ein weiteres Segment, das zwischen dem vorderen Segment und dem hinteren Segment angeordnet ist. Die Segmente sind vorzugsweise stabförmig ausgebildet. Die Segmente weisen vorzugsweise denselben oder einen ähnlichen Durchmesser auf. Die Segmente können gleichlang oder unterschiedlich lang ausgebildet sein. Vorzugsweise sind nebeneinander angeordnete Segmente unterschiedlich ausgebildet, wobei sich insbesondere die Materialzusammensetzung der nebeneinander angeordneten Segmente unterscheiden kann. Vorzugsweise ist mindestens eines der Segmente mit Tabakmaterial gefüllt. Vorzugsweise ist mindestens eines der Segmente als Filtersegment ausgebildet. Besonders bevorzugt ist es, dass mindestens zwei der Segmente als Filtersegment ausgebildet sind. Es ist auch möglich, dass mindestens eines der Segmente als ungefüllter Hohlzylinder ausgebildet ist.

Der stabförmige Artikel weist vorzugsweise höchstens acht, besonders bevorzugt höchstens sieben, weiter bevorzugt höchstens sechs, insbesondere höchstens fünf, entlang der Längsachse des stabförmigen Artikels nebeneinander angeordnete Segmente auf.

Der stabförmige Artikel weist vorzugsweise mindestens ein Umhüllungsmaterial, insbesondere Umhüllungspapier, auf, das die Segmente des stabförmigen Artikels zumindest teilweise, vorzugsweise vollständig, entlang des Außenumfangs der nebeneinander angeordneten Segmente umhüllt.

Vorzugsweise ist mindestens eines der Segmente des stabförmigen Artikels ein Filtersegment, wobei vorzugsweise alle Segmente des stabförmigen Artikels Filtersegmente sind und der stabförmige Artikel als Multifiltersegment ausgebildet ist.

Da eine Fördertrommel, die zum Transport der stabförmigen Artikel während der Messung vorgesehen ist, Bestandteil der erfindungsgemäßen Messanordnung ist, kann die Fördertrommel auch als Prüftrommel bezeichnet werden. Sofern die Fördertrommel Mulden aufweist, kann die Fördertrommel auch als Muldentrommel bezeichnet werden.

Unter einem queraxialen Fördern eines stabförmigen Artikels ist insbesondere zu verstehen, dass der stabförmige Artikel quer, also orthogonal, zu seiner Längsachse gefördert wird.

Vorzugsweise weist die Fördertrommel mehrere entlang des Umfangs der Fördertrommel angeordnete Aufnahmebereiche auf, die jeweils zum Halten eines stabförmigen Artikels ausgebildet sind. Vorzugsweise weisen die Aufnahmebereiche Saugkanäle auf, die ausgebildet sind, um in den Aufnahmebereichen angeordnete stabförmige Artikel in den Aufnahmebereichen zu halten, um ein unerwünschtes Herausfallen der stabförmigen Artikel zu vermeiden.

Mindestens eine der Beleuchtungsquellen ist ausgebildet, um monochromatisches oder nahezu monochromatisches und/oder farbiges Licht oder dichromatisches oder nahezu dichromatisches und/oder farbiges Licht auszusenden. Demnach kann das Licht monochromatisch oder monochromatisch und farbig oder nahezu monochromatisch oder nahezu monochromatisch und farbig oder dichromatisch oder dichromatisch und farbig oder nahezu dichromatisch oder nahezu dichromatisch und farbig oder farbig sein. Demnach ist mindestens eine der Beleuchtungsquellen ausgebildet, um monochromatisches Licht oder monochromatisches und farbiges Licht oder nahezu monochromatisches Licht oder nahezu monochromatisches und farbiges Licht oder dichromatisches Licht oder dichromatisches und farbiges Licht oder nahezu dichromatisches Licht oder nahezu dichromatisches und farbiges Licht oder farbiges Licht auszusenden. Vorzugsweise sind alle Beleuchtungsquellen dazu ausgebildet, um monochromatisches oder nahezu monochromatisches und/oder farbiges Licht oder dichromatisches oder nahezu dichromatisches und/oder farbiges Licht auszusenden.

Vorzugsweise ist mindestens eine, bevorzugt alle, der Beleuchtungsquellen ausgebildet, um monochromatisches oder nahezu monochromatisches und/oder farbiges oder dichromatisches oder nahezu dichromatisches und/oder farbiges Licht im sichtbaren Bereich auszusenden, insbesondere innerhalb des Wellenlängenbereichs von 400 nm bis 780 nm.

Unter monochromatischem oder nahezu monochromatischem Licht ist einfarbiges Licht einer bestimmten Wellenlänge oder eines konkreten, engen Wellenlängenbereichs, bevorzugt von wenigen Nanometern, zu verstehen. Vorzugsweise liegt die bestimmte Wellenlänge oder der konkrete, enge Wellenlängenbereich des monochromatischen oder nahezu monochromatischen Lichts innerhalb einer der folgenden Wellenlängenbereiche: 450 nm bis 500 nm (blaues Licht), 500 nm bis 570 nm (grünes Licht), 610 nm bis 760 nm (rotes Licht).

Unter dichromatischem oder nahezu dichromatischem Licht ist zweifarbiges Licht mit zwei bestimmten Wellenlängen oder zwei konkreten, engen Wellenlängenbereichen, bevorzugt jeweils von wenigen Nanometern, zu verstehen. Vorzugsweise liegt jede dieser zwei bestimmten Wellenlängen oder der zwei konkreten, engen Wellenlängenbereiche des dichromatischen oder nahezu dichromatischen Lichts innerhalb einer der folgenden Wellenlängenbereiche: 450 nm bis 500 nm (blaues Licht), 500 nm bis 570 nm (grünes Licht), 610 nm bis 760 nm (rotes Licht).

Unter farbigem Licht ist Licht zu verstehen, das eine Farbe aufweist und nicht weiß ist. Farbiges Licht kann insbesondere blaues Licht oder grünes Licht oder rotes Licht oder Licht aus einer Mischung dieser Farben und/oder anderer Farben sein.

Die Beleuchtungsquellen sind vorzugsweise mit der Fördertrommel verbunden. Vorzugsweise sind die Beleuchtungsquellen bezogen auf die radiale Richtung der Fördertrommel weiter in Richtung der Rotationsachse der Fördertrommel angeordnet als der Aufnahmebereich. Vorzugsweise sind die Beleuchtungsquellen nebeneinander angeordnet. Vorzugsweise erstrecken sich die nebeneinander angeordneten Beleuchtungsquellen parallel zur Aufnahmeachse des Aufnahmebereichs.

Die Beleuchtungsquellen sind ausgebildet und angeordnet, um Licht in radialer Richtung des stabförmigen Artikels, also insbesondere quer zur Längsachse des stabförmigen Artikels, durch den stabförmigen Artikel hindurchzusenden.

Die Beleuchtungsquellen sind vorzugsweise als Leuchtdioden oder Laser ausgebildet.

Es ist besonders bevorzugt, dass die Beleuchtungsquellen ausgebildet sind, um monochromatisches oder nahezu monochromatisches Licht auszusenden, wobei vorzugsweise die Beleuchtungsquellen als Leuchtdioden oder Laser ausgebildet sind.

Die Beleuchtungsquellen können insbesondere als Leuchtdioden (LED) ausgebildet sein, wobei die Leuchtdioden jeweils Licht einer bestimmten Farbe aussenden, wobei die bestimmte Farbe vorzugsweise rot oder grün oder blau ist. Die Beleuchtungsquellen können aber auch als Laser ausgebildet sein, wobei die Laser jeweils Licht einer bestimmten Farbe aussenden, wobei die bestimmte Farbe vorzugsweise rot oder grün oder blau ist. Das Licht mit dem auf diese Weise die Segmente des stabförmigen Artikels durchleuchtet werden, wird innerhalb des Materials der Segmente unterschiedlich stark gestreut und tritt in der Folge rundherum aus dem stabförmigen Artikel aus. Sofern alternativ oder zusätzlich zur Intensität des austretenden Lichts unterschiedliche Lichtfarben verwendet werden, kann insbesondere die Unterscheidbarkeit der Segmente verbessert werden, was einen deutlichen Vorteil bieten kann, da dann besonders genaue und zuverlässige Messungen der Segmente möglich sind.

Es ist auch möglich, dass mindestens eine der Beleuchtungsquellen als Leuchtdiode und mindestens eine der Beleuchtungsquellen als Laser ausgebildet sind. Es ist ferner möglich, dass weitere Beleuchtungsquellen vorgesehen sind, die kein monochromatisches oder nahezu monochromatisches Licht aussenden.

Es ist besonders bevorzugt, dass die Beleuchtungsvorrichtung eine erste Beleuchtungsquelle und eine zweite Beleuchtungsquelle umfasst, die ausgebildet sind, um monochromatisches oder nahezu monochromatisches Licht unterschiedlicher Farbe auszusenden. Es ist also bevorzugt, dass die erste und die zweite Beleuchtungsquelle monochromatisches Licht mit unterschiedlicher Wellenlänge und/oder mit unterschiedlichem Wellenlängenbereich aussenden. Vorzugsweise sendet die erste Beleuchtungsquelle monochromatisches oder nahezu monochromatisches Licht aus, das eine andere Wellenlänge als die Wellenlänge des Lichts der zweiten Beleuchtungsquelle oder einen anderen Wellenlängenbereich als der Wellenlängenbereich des Lichts der zweiten Beleuchtungsquelle aussendet.

Vorzugsweise senden benachbart angeordnete Beleuchtungsquellen Licht unterschiedlicher Farbe aus.

Vorzugsweise sind die erste und die zweite Beleuchtungsquelle ausgebildet, um monochromatisches Licht im sichtbaren Bereich auszusenden, insbesondere innerhalb des Wellenlängenbereichs von 400 nm bis 780 nm.

Vorzugsweise umfasst die Beleuchtungsvorrichtung eine dritte Beleuchtungsquelle, die ausgebildet ist, um monochromatisches oder nahezu monochromatisches Licht mit einer anderen Farbe als der Farbe des Lichts der ersten Beleuchtungsquelle und/oder der Farbe des Lichts der zweiten Beleuchtungsquelle auszusenden.

Es ist also bevorzugt, dass die erste und die zweite und die dritte Beleuchtungsquelle monochromatisches Licht mit unterschiedlicher Wellenlänge und/oder mit unterschiedlichem Wellenbereich aussenden. Vorzugsweise sendet die dritte Beleuchtungsquelle monochromatisches oder nahezu monochromatisches Licht aus, das eine andere Wellenlänge als die Wellenlänge des Lichts der ersten Beleuchtungsquelle und eine andere Wellenlänge als die Wellenlänge des Lichts der zweiten Beleuchtungsquelle oder einen anderen Wellenlängenbereich als der Wellenlängenbereich des Lichts der zweiten Beleuchtungsquelle und einen anderen Wellenlängenbereich als der Wellenlängenbereich des Lichts der dritten Beleuchtungsquelle aussendet.

Vorzugsweise ist die dritte Beleuchtungsquelle ausgebildet, um monochromatisches Licht im sichtbaren Bereich auszusenden, insbesondere innerhalb des Wellenlängenbereichs von 400 nm bis 780 nm.

Es ist besonders bevorzugt, dass mindestens eine der Beleuchtungsquellen ausgebildet ist, um grünes Licht auszusenden, und/oder wobei mindestens eine der Beleuchtungsquellen ausgebildet ist, um rotes Licht auszusenden, und/oder wobei mindestens eine der Beleuchtungsquellen ausgebildet ist, um blaues Licht auszusenden.

Vorzugsweise ist mindestens eine der Beleuchtungsquellen ausgebildet, um ausschließlich grünes Licht auszusenden, und/oder mindestens eine der Beleuchtungsquellen ausgebildet ist, um ausschließlich rotes Licht auszusenden, und/oder mindestens eine der Beleuchtungsquellen ausgebildet ist, um ausschließlich blaues Licht auszusenden.

Ein Vorteil der Verwendung mindestens einer Beleuchtungsquelle, die grünes Licht aussendet, mindestens einer Beleuchtungsquelle, die rotes Licht aussendet, und mindestens einer Beleuchtungsquelle, die blaues Licht aussendet, besteht darin, dass aufgrund dieser unterschiedlichen und klar unterscheidbaren Farben eine verbesserte Erkennung der Segmente und/oder Segmentgrenzen ermöglicht wird. Dadurch können Segmente von stabförmigen Artikeln besonders genau und besonders zuverlässig gemessen werden. Die grüne Farbe hat dabei den besonderen Vorteil, dass Farbkameras üblicherweise eine höhere Sensitivität für grünes Licht aufweisen als für Licht anderer Farben, weshalb grünes Licht, das aus einem stabförmigen Artikel austritt besonders gut analysiert werden kann und gegebenenfalls eine höhere Genauigkeit der Messung erreicht werden kann.

Es ist besonders bevorzugt, dass die Beleuchtungsquellen höchstens 20 mm, vorzugsweise höchstens 15 mm, besonders bevorzugt höchstens 10 mm, insbesondere höchstens 5 mm, voneinander beabstandet angeordnet sind. Vorzugsweise sind die Beleuchtungsquellen derart zueinander beabstandet, dass jedem Segment des zu untersuchenden stabförmigen Artikels mindestens eine der Beleuchtungsquellen zugeordnet ist.

Eine solche geringe Beabstandung der Beleuchtungsquellen zueinander hat den Vorteil, dass die nebeneinander angeordneten Segmente mit unterschiedlichen Farben durchleuchtet werden können, wodurch eine verbesserte Unterscheidbarkeit der Segmente und eine genauere Messung der Segmentlängen und Segmentgrenzflächen ermöglicht wird.

Es ist besonders bevorzugt, dass die Beleuchtungsvorrichtung mindestens drei, vorzugsweise mindestens vier, besonders bevorzugt mindestens fünf, insbesondere mindestens sechs, nebeneinander angeordnete Beleuchtungsquellen aufweist.

Vorzugsweise sind mindestens so viele Beleuchtungsquellen vorgesehen, wie Segment des zu untersuchenden stabförmigen Artikels vorgesehen sind, damit jedem der Segmente mindestens eine der Beleuchtungsquellen zugeordnet sein kann.

Es ist besonders bevorzugt, dass die Beleuchtungsvorrichtung zusätzlich eine erste seitliche Beleuchtungsquelle aufweist, die ausgebildet und angeordnet ist, um, vorzugsweise monochromatisches oder nahezu monochromatisches, Licht auf eine erste Stirnseite eines in dem Aufnahmebereich gehaltenen stabförmigen Artikels in axialer Richtung des stabförmigen Artikels durch den stabförmigen Artikel hindurchzusenden.

Demnach ist vorzugsweise zusätzlich zu den mehreren Beleuchtungsquellen eine erste seitliche Beleuchtungsquelle vorgesehen, die Licht in einer Richtung orthogonal zur Richtung des Lichts der mehreren Beleuchtungsquellen aussendet. Vorzugsweise sendet die erste seitliche Beleuchtungsquelle monochromatisches oder nahezu monochromatisches Licht auf eine erste Stirnseite eines stabförmigen Artikels. Dadurch kann auf besonders vorteilhafte Weise erreicht werden, dass das äußere Segment, auf dessen Stirnseite das Licht der ersten seitlichen Beleuchtungsquelle auftritt, noch besser durchleuchtet wird und somit dieses äußere Segment noch genauer und zuverlässiger gemessen werden kann.

Vorzugsweise weist die Beleuchtungsvorrichtung zusätzlich eine zweite seitliche Beleuchtungsquelle auf, die ausgebildet und angeordnet ist, um, vorzugsweise monochromatisches oder nahezu monochromatisches, Licht auf eine der ersten Stirnseite gegenüberliegende zweite Stirnseite eines in dem Aufnahmebereich gehaltenen stabförmigen Artikels in axialer Richtung des stabförmigen Artikels durch den stabförmigen Artikel hindurchzusenden.

Demnach ist vorzugsweise zusätzlich zu den mehreren Beleuchtungsquellen eine zweite seitliche Beleuchtungsquelle vorgesehen, die Licht in einer Richtung orthogonal zur Richtung des Lichts der mehreren Beleuchtungsquellen aussendet. Vorzugsweise sendet die zweite seitliche Beleuchtungsquelle monochromatisches oder nahezu monochromatisches Licht auf eine zweite Stirnseite eines stabförmigen Artikels. Dadurch kann auf besonders vorteilhafte Weise erreicht werden, dass das äußere Segment, auf dessen Stirnseite das Licht der zweiten seitlichen Beleuchtungsquelle auftritt, noch besser durchleuchtet wird und somit dieses äußere Segment noch genauer und zuverlässiger gemessen werden kann.

Es ist besonders bevorzugt, dass die Beleuchtungsvorrichtung eine Lichtbündelungsvorrichtung, vorzugsweise umfassend eine Linse und/oder eine Spaltanordnung aufweist.

Unter Spaltanordnung ist insbesondere eine Anordnung zu verstehen, die einen Spalt zwischen der jeweiligen Beleuchtungsquelle und dem zu messenden strangförmigen Artikel ausbildet. Die Spaltanordnung kann beispielsweise mittels zwei Platten gebildet oder hohlzylinderförmig oder kreisförmig ausgebildet sein.

Das Vorsehen einer Lichtbündelungsvorrichtung ist besonders vorteilhaft, da bei einem fast punktförmigen Eintrag des Lichts eine noch bessere Unterscheidbarkeit zwischen benachbarten Segmenten erreicht werden kann. Denn dann kann erreicht werden, dass das Licht nur auf ein Segment auftritt und von dort durch das Segment hindurchleuchtet. Es kann so auf besonders vorteilhafte Weise vermieden werden, dass benachbarte Segmente nicht mit dem Licht derselben Beleuchtungsquelle beleuchtet werden. Auf diese Weise kann ein besonders großer Intensitätssprung zwischen den Segmenten erzielt werden, wodurch eine deutlichere Unterscheidbarkeit zwischen benachbarten Segmenten erzielt und ein genaueres Vermessen der Segmente möglich wird.

Eine Lichtbündelungsvorrichtung kann auch durch einen schmalen Lichtaustritt nahe des stabförmigen Artikels realisiert werden.

Eine Lichtbündelungsvorrichtung kann auch durch das Vorsehen eines Lasers als Beleuchtungsquelle erreicht werden, wobei dann nicht zwingend eine Spaltanordnung und/oder eine Linse notwendig sind, um einen stabförmigen Artikel nahezu punktförmig mit Licht zu beleuchten.

Es ist besonders bevorzugt, dass die Beleuchtungsvorrichtung ausgebildet ist, um jedes zweite Segment eines stabförmigen Artikels zu beleuchten.

Es kann insbesondere vorteilhaft sein, zumindest jedes zweite Segment eines stabförmigen Artikels zu beleuchten.

Wird jedes zweite Segment angestrahlt, so kann erreicht werden, dass hierdurch sämtliche Segmentgrenzen hervorgehoben werden. Auf diese Weise können auf besonders vorteilhafte Weise auch lichtundurchlässige Segmente indirekt hervorgehoben werden.

Es ist besonders bevorzugt, dass jede der Beleuchtungsquellen der Beleuchtungsvorrichtung einem Segment des zu vermessenden stabförmigen Artikels zugeordnet ist.

Ist jede Beleuchtungsquelle genau einem der Segmente des zu messenden stabförmigen Artikels zugeordnet und wird das Licht außerdem nahezu punktförmig auf die Segmente aufgebracht, können besonders gute Ergebnisse erzielt werden, da dann die Intensitätssprünge und ggf. die verschiedenfarbigen Segmentgrenzen besonders gut sichtbar werden.

Es ist besonders bevorzugt, dass die Beleuchtungsvorrichtung mittels einer Steuerungseinheit steuerbar ist, wobei die Beleuchtungsquellen der Beleuchtungsvorrichtung in Abhängigkeit von den Segmentlängen der zu vermessenden stabförmigen Artikel gesteuert werden, wobei vorzugsweise mindestens eine der Beleuchtungsquellen in Abhängigkeit von den Segmentlängen der zu vermessenden stabförmigen Artikel angeschaltet wird und mindestens eine der Beleuchtungsquellen in Abhängigkeit von den Segmentlängen der zu vermessenden stabförmigen Artikel ausgeschaltet wird.

Vorzugsweise ist die Steuerungseinheit mit den Beleuchtungsquellen signaltechnisch verbunden, damit die Beleuchtungsquellen von der Steuerungseinheit angesteuert werden können.

Vorzugsweise wird mindestens eine der Beleuchtungsquellen in Abhängigkeit von den Segmentlängen der zu vermessenden stabförmigen Artikel angeschaltet und/oder mindestens eine der Beleuchtungsquellen in Abhängigkeit von den Segmentlängen der zu vermessenden stabförmigen Artikel ausgeschaltet.

Es ist besonders bevorzugt, dass die Beleuchtungsquellen nebeneinander entlang einer Geraden, die parallel zur Aufnahmeachse verläuft, angeordnet sind. Dadurch ist es möglich, mehrere Segmente eines stabförmigen Artikels entlang der Längsachse des stabförmigen Artikels mit mehreren Beleuchtungsquellen zu beleuchten. Auf diese Weise kann die oben beschriebene besonders vorteilhafte Unterscheidbarkeit benachbarter Segmente erreicht werden.

Es ist besonders bevorzugt, dass die Fördertrommel mehrere entlang des Umfangs der Fördertrommeln angeordnete Aufnahmebereiche aufweist, wobei die Messanordnung mehrere Beleuchtungsvorrichtungen aufweist, die jeweils einem der Aufnahmebereiche zugeordnet und/oder jeweils an einem der Aufnahmebereiche angeordnet sind.

Vorzugsweise sind an jedem der Aufnahmebereiche mehrere Beleuchtungsvorrichtungen angeordnet. Vorzugsweise sind diese Beleuchtungsquellen bei jedem der Aufnahmebereiche nebeneinander entlang einer Geraden, die parallel zur jeweiligen Aufnahmeachse verläuft, angeordnet. Dadurch wird es ermöglicht, mehrere Segmente der in den mehreren Aufnahmebereichen angeordneten stabförmigen Artikeln jeweils entlang der Längsachse der stabförmigen Artikel mit mehreren Beleuchtungsquellen zu beleuchten. Auf diese Weise kann die oben beschriebene besonders vorteilhafte Unterscheidbarkeit benachbarter Segmente erreicht werden.

Es ist besonders bevorzugt, dass die Bilderfassungsvorrichtung eine Kamera, vorzugsweise eine Farbkamera, besonders bevorzugt eine RGB-Kamera, umfasst, wobei die Kamera vorzugsweise mindestens einen Farbfilter aufweist.

Der Farbfilter kann insbesondere als RGB-Filter und/oder mit einem Grünfilter und/oder einem Rotfilter und/oder einem Blaufilter, ausgebildet sein.

Vorzugsweise ist die Kamera ausgebildet, um auch die Umfangsfläche des Umhüllungsmaterials aufzunehmen zur Ermittlung der Umfangsfläche des stabförmigen Artikels. Dies ist besonders vorteilhaft, da auf diese Weise nicht nur die Segmente und Segmentgrenzflächen und Segmentlängen gemessen werden können, sondern auch die äußere Umfangsform des stabförmigen Artikels gemessen werden kann. Dadurch können beispielsweise unerwünschte Abweichungen oder Defekte auf der Umfangsfläche detektiert werden.

Die Kamera ist bevorzugt eine Farbkamera. Unter einer Farbkamera ist insbesondere eine Kamera zu verstehen, die Farbbilder erzeugt. Es ist aber auch denkbar, dass die Kamera ist eine Schwarz-Weiß-Kamera ausgebildet ist. Unter einer Schwarz-Weiß-Kamera ist eine Kamera zu verstehen, die ein Graustufenbild erzeugt. Die Kamera weist vorzugsweise einen Kamerachip oder mehrere Kamerachips auf, bevorzugt zwei, drei oder vier Kamerachips.

Die Kamera ist bevorzugt ausgebildet, wie in DE 102020106444 A1 beschrieben. In dieser Hinsicht wird Bezug genommen auf die Anmeldung DE 102020106444 A1, deren Inhalt hiermit in diese Anmeldung aufgenommen wird.

Vorzugsweise weist die Bilderfassungsvorrichtung einen Spiegel zum Umlenken des aus dem zu vermessenden stabförmigen Artikel austretenden Lichts in Richtung der Kamera auf. Mittels eines solchen Spiegels bestehen mehr Möglichkeiten, die Kamera relativ zur Fördertrommel anzuordnen, da die Kameraachse nicht direkt auf den stabförmigen Artikel gerichtet sein muss, sondern über einen Spiegel das Licht von dem stabförmigen Artikel zur Kamera umgeleitet werden kann.

Es ist besonders bevorzugt, dass die Bilderfassungsvorrichtung eine optische Achse aufweist und die Beleuchtungsquellen der Beleuchtungsvorrichtung Lichtachsen aufweisen, wobei Bilderfassungsvorrichtung und die Beleuchtungsquellen der Beleuchtungsvorrichtung nicht parallel zueinander, sondern derart relativ zueinander angeordnet sind, dass der Winkel zwischen der optischen Achse der Bilderfassungsvorrichtung und der Lichtachsen der Beleuchtungsquellen kleiner als 180°, vorzugsweise kleiner als 120°, besonders bevorzugt kleiner als 100°, insbesondere kleiner als 90°, ist.

Unter der optischen Achse ist in diesem Zusammenhand die Achse zu verstehen, die auf den stabförmigen Artikel trifft und entweder zu einem Spiegel der Bilderfassungsvorrichtung weist, von wo das Licht in Richtung der Kamera umgelegt wird, oder direkt zu der Kamera, insbesondere der Kameraachse, weist.

Vorzugsweise ist der Winkel zwischen der optischen Achse und der Kameraachse kleiner als 180°, vorzugsweise kleiner als 120°, besonders bevorzugt kleiner als 100°, insbesondere kleiner als 90°.

Es ist besonders bevorzugt, dass die Bildverarbeitungseinheit ausgebildet ist, um das mittels der Bilderfassungsvorrichtung aufgenommene Bild in Abhängigkeit von unterschiedlich farbigem Licht auszuwerten, und insbesondere anhand des unterschiedlich farbigen Lichts einen Segmentübergang und/oder eine Länge eines Segments und/oder ein Vorhandensein eines Segments eines stabförmigen Artikels zu ermitteln.

Vorzugsweise können somit mittels der Bildverarbeitungseinheit anhand der mittels der Bilderfassungsvorrichtung aufgenommenen Bildern Segmentübergänge und/oder Längen von Segmenten und/oder ein Vorhandensein von Segmenten von stabförmigen Artikeln ermittelt werden.

Vorzugsweise wird das an anderer Stelle als der Lichteintrittsstelle radial aus dem stabförmigen Artikel austretende Licht per Kamera aufgenommen und in der Bildverarbeitungseinheit einem Auswertungssystem für eine Bildverarbeitung zugeführt. Bei einer solchen Bildverarbeitung können die Intensitäten der unterschiedlichen Lichtfarben ausgenutzt werden, um die interne Grenzflächen zwischen den benachbarten Segmenten zu vermessen sowie um das Vorhandensein der einzelnen Segmente zu überprüfen.

Werden zwei benachbarte Segmente aus Materialien mit sehr ähnlichen Lichtstreuungseigenschaften verwendet, so kann die Verwendung unterschiedlicher Lichtfarben, also Licht mit unterschiedlichen Wellenlängen, dazu beitragen, auf besonders vorteilhafte Weise die Unterscheidbarkeit zu verbessern.

Hierbei wird vorzugsweise ausgenutzt, dass das austretende Licht am Materialübergang in der Regel einen Sprung in der Intensität aufweist - und sei es nur aufgrund der Beschaffenheit des Umhüllungspapieres im Zusammenhang mit minimalen Durchmesser-Abweichungen der Segmente. Somit kann bei Berücksichtigung von Lichtintensitätssprüngen eine besonders genaue und zuverlässige Messung erreicht werden.

Es ist besonders bevorzugt, dass die Bildverarbeitungseinheit ausgebildet ist, um das Vorhandensein eines Segments in Abhängigkeit von einer gemessenen Lichtintensität zu ermitteln.

Ein Vorteil einer solchen Ermittlung eines Vorhandenseins von Segmenten liegt darin, dass dies anhand der Lichtintensität besonders gut möglich ist. Ein fehlendes Segment kann nämlich deutlich erkannt werden, wenn eine abweichende, insbesondere deutlich höhere, Lichtintensität durch hindurchscheinendes Licht vorhanden ist. So kann auf besonders vorteilhafte Weise erkannt werden, ob die gewünschten bzw. erforderlichen Segmente jeweils vorhanden sind oder nicht.

Es ist besonders bevorzugt, dass die Bildverarbeitungseinheit ausgebildet ist, um einen Segmentübergang in Abhängigkeit von einem ermittelten Lichtintensitätssprung zu ermitteln. Vorzugsweise ist die Bildverarbeitungseinheit ausgebildet, um die genaue Position eines Segmentübergangs in Abhängigkeit von einem ermittelten Lichtintensitätssprung zu ermitteln.

Ein Vorteil einer solchen Ermittlung von Segmentgrenzen liegt darin, dass auch diese Grenzen anhand der Lichtintensität besonders gut identifiziert werden können. Ein fehlendes Segment kann nämlich deutlich erkannt werden, wenn eine abweichende, insbesondere deutlich höhere, Lichtintensität durch hindurchscheinendes Licht vorhanden ist. So kann auf besonders vorteilhafte Weise erkannt werden, ob die gewünschten Segmente jeweils vorhanden sind.

Es ist besonders bevorzugt, dass die Bildverarbeitungseinheit ausgebildet ist, um die mittels der Bilderfassungsvorrichtung aufgenommenen Bilder mit selektiv gewählten Farbkanälen, vorzugsweise mit mindestens zwei, besonders bevorzugt mindestens drei Farbkanälen, insbesondere rot, grün und blau, zu analysieren.

Ein Vorteil einer solchen Verwendung selektiver Farbkanäle liegt darin, dass durch eine entsprechende Beleuchtung des stabförmigen Artikels mit unterschiedlichen Farben je Segment die jeweiligen Segmentgrenzen auf unterschiedlichen Farbkanälen der Kamera vermessen werden können. Es entsteht dann insbesondere derselbe Effekt, als wäre erst ein Segment und anschließend ein anderes Segment von dem Licht durchstrahlt worden. Insbesondere die Farben Rot, Grün und Blau eigenen sich besonders gut hierfür, da hierdurch automatisch eine möglichst scharfe Trennung der eingebrachten Lichtfarben im Kamera-Sensor entsteht. Dieser Effekt kann bereits mit zwei unterschiedlichen Farben erreicht werden, ist aber besonders vorteilhaft bei einer Verwendung von drei unterschiedlichen Farben, denn dann kann bei Änderungen der Segmentlängen erreicht werden, dass immer zwei unterschiedliche Farben pro Segmentgrenze auswertbar sind.

Es ist besonders bevorzugt, dass der Aufnahmebereich eine Aufnahmeachse aufweist, entlang derer sich beim Halten eines stabförmigen Artikels im Aufnahmebereich die Längsachse des stabförmigen Artikels erstreckt, wobei die Aufnahmeachse sich parallel zur Rotationsachse der Fördertrommel erstreckt.

Vorzugsweise erstrecken sich die Beleuchtungsquellen parallel zur Aufnahmeachse. Vorzugsweise weist der Aufnahmebereich eine Mulde auf.

Es ist besonders bevorzugt, dass die Fördertrommel mindestens eine nach außen offene Mulde zur Aufnahme eines stabförmigen Artikels, vorzugsweise mehrere nach außen offene Mulden zur Aufnahme stabförmiger Artikel, aufweist.

Vorzugsweise sind die Beleuchtungsquellen in der Mulde und/oder in einer unterhalb der Mulde vorgesehenen und mit der Mulde kommunizierenden Vertiefung angeordnet, wobei die Mulde und die Beleuchtungsquellen so angeordnet sind, dass bei Aufnahme eines stabförmigen Artikels in der Mulde die Beleuchtungsquellen und der stabförmige Artikel in etwa in radialer Ausrichtung bezogen auf die Rotationsachse der Fördertrommel zueinander angeordnet sind.

Gemäß einem weiteren Aspekt wird die eingangs genannte Aufgabe gelöst durch eine Vorrichtung zur Herstellung eines stabförmigen Artikels der tabakverarbeitenden Industrie, der eine Längsachse und mehrere, vorzugsweise mindestens drei oder mindestens vier oder mindestens sieben, entlang der Längsachse nebeneinander angeordnete Segmente aufweist, die Vorrichtung umfassend: eine Maschine zur Herstellung von stabförmigen Artikeln mit einem Abgabebereich zur Abgabe von hergestellten stabförmigen Artikeln, vorzugsweise eine Multisegmentfilterherstellungsmaschine mit einem Abgabebereich zur Abgabe von hergestellten Multisegmentfilterstäben, und eine Messanordnung wie hierin beschrieben, wobei die Messanordnung einen Aufnahmeabschnitt zur Aufnahme der von der Maschine zur Herstellung von stabförmigen Artikeln hergestellten stabförmigen Artikel aufweist.

Die Maschine zur Herstellung von stabförmigen Artikeln kann insbesondere eine Zigarettenherstellungsmaschine oder eine Multisegmentfilterherstellungsmaschine oder eine Maschine zur Herstellung anderer stabförmiger Artikel sein.

Der Abgabebereich der Maschine ist vorzugsweise ausgebildet, um stabförmige Artikel an den Aufnahmeabschnitt der Messanordnung zu übergeben.

Gemäß einem weiteren Aspekt wird die eingangs genannte Aufgabe gelöst durch ein Verfahren zum Messen eines Segmentübergangs und/oder einer Länge eines Segments und/oder eines Vorhandenseins eines Segments eines stabförmigen Artikels der tabakverarbeitenden Industrie, das Verfahren umfassend: Bereitstellen einer Messanordnung, vorzugsweise einer Messanordnung wie hierin beschrieben, zum Messen eines Segmentübergangs und/oder einer Länge eines Segments und/oder eines Vorhandenseins eines Segments eines stabförmigen Artikels der tabakverarbeitenden Industrie, Queraxiales Fördern eines stabförmigen Artikels der tabakverarbeitenden Industrie, der eine Längsachse und mehrere, vorzugsweise mindestens drei oder mindestens vier oder mindestens sieben, entlang der Längsachse des stabförmigen Artikels nebeneinander angeordnete Segmente aufweist, Beleuchten des stabförmigen Artikels mittels mehrerer Beleuchtungsquellen einer Beleuchtungsvorrichtung, wobei die Beleuchtungsquellen monochromatisches oder nahezu monochromatisches und/oder farbiges Licht oder dichromatisches oder nahezu dichromatisches und/oder farbiges Licht auf eine Mantelfläche des stabförmigen Artikels durch den stabförmigen Artikel hindurchsenden, Aufnehmen eines Bildes von der Mantelfläche des durchleuchteten stabförmigen Artikels, Auswerten des aufgenommenen Bildes in Abhängigkeit von dem aus dem stabförmigen Artikel austretenden Licht, und Ermitteln eines Segmentübergangs und/oder einer Länge eines Segments und/oder eines Vorhandenseins eines Segments des stabförmigen Artikels.

Die Segmente weisen vorzugsweise eine Segmentlänge von mindestens 3 mm, vorzugsweise mindestens 4 mm, besonders bevorzugt von mindestens 5 mm auf. Die Segmente weisen vorzugsweise eine Segmentlänge von höchstens 40 mm, besonders bevorzugt von höchstens 30 mm, insbesondere von höchstens 25 mm auf.

Es ist besonders bevorzugt, dass unter jedem Segment des stabförmigen Artikels mindestens eine Beleuchtungsquelle angeordnet ist und/oder wobei jedem Segment des stabförmigen Artikels eine, bevorzugt eigene, Beleuchtungsquelle zugeordnet ist.

Ein Vorteil einer solchen Anordnung liegt darin, dass dann die Segmentgrenzen und das Vorhandensein von Segmenten besonders zuverlässig und genau ermittelt werden kann.

Es ist besonders bevorzugt, dass die Beleuchtungsquellen in Abhängigkeit von der Anordnung und/oder der Länge der Segmente des stabförmigen Artikels angesteuert werden.

Vorzugsweise werden mittels einer Steuerungseinheit in Abhängigkeit von dem Aufbau des stabförmigen Artikels, insbesondere in Abhängigkeit von den Segmentlängen und der Anordnung der Segmente nebeneinander, die Beleuchtungsquellen angesteuert. Damit kann auf besonders vorteilhafte Weise eine an die Anordnung der Segmente angepasste Beleuchtung des stabförmigen Artikels erreicht werden.

Es ist besonders bevorzugt, dass mindestens eines der Segmente des stabförmigen Artikels ein Filtersegment ist, wobei vorzugsweise alle Segmente des stabförmigen Artikels Filtersegmente sind.

Es ist besonders bevorzugt, dass vor dem Beleuchten des stabförmigen Artikels mittels der Beleuchtungsquellen die Segmente des stabförmigen Artikels mittels einer Zusammenstelleinheit zusammengesetzt werden und vorzugsweise die zusammengesetzten Segmente mittels eines Umhüllungsmaterials, insbesondere eines Umhüllungspapiers, mittels einer Umhüllungseinheit umhüllt werden.

Es ist besonders bevorzugt, dass nach dem Beleuchten des stabförmigen Artikels mittels der Beleuchtungsquellen der stabförmige Artikel weiteren Prüfschritten, insbesondere mittels pneumatischer und/oder optischer und/oder mikrowellentechnischer Prüfung, unterzogen wird.

Vorzugsweise finden nach dem Beleuchten des stabförmigen Artikels noch weitere Prüfschritte, insbesondere pneumatischer und/oder optischer Art statt. Dabei kann beispielsweise eine Mikrowellentechnikprüfung und/oder eine Stirnflächeninspektion erfolgen. Die weiteren Prüfschritte können insbesondere an einem sogenannten Prüfturm erfolgen. Ein solcher Prüfturm ist bevorzugt ausgebildet, wie in EP 3677128 B1 beschrieben. In dieser Hinsicht wird Bezug genommen auf das Dokument EP 3677128 B1, dessen Inhalt hiermit in diese Anmeldung aufgenommen wird.

Es ist besonders bevorzugt, dass das aufgenommene Bild in Abhängigkeit von unterschiedlich farbigem Licht ausgewertet wird. Vorzugsweise wird anhand des unterschiedlich farbigen Lichts ein Segmentübergang (U1, U2, U3) und/oder eine Länge (L1, L2, L3, L4) eines Segments (S1, S2, S3, S4) und/oder ein Vorhandensein eines Segments (S1, S2, S3, S4) eines stabförmigen Artikels (A) ermittelt.

Gemäß einem weiteren Aspekt wird die eingangs genannte Aufgabe gelöst durch eine Verwendung einer wie hier beschriebenen Messanordnung, zum Messen eines Segmentübergangs und/oder einer Länge eines Segments und/oder eines Vorhandenseins eines Segments eines stabförmigen Artikels der tabakverarbeitenden Industrie, insbesondere in Form eines stabförmigen Artikels für erhitzte Tabakerzeugnisse oder in Form einer Multisegmentzigarette oder in Form eines Multifiltersegments, wobei der stabförmige Artikel vorzugsweise mindestens drei oder mindestens vier oder mindestens sieben, entlang der Längsachse des stabförmigen Artikels nebeneinander angeordnete Segmente aufweist.

Der stabförmige Artikel weist vorzugsweise höchstens acht, besonders bevorzugt höchstens sieben, weiter bevorzugt höchstens sechs, insbesondere höchstens fünf, entlang der Längsachse des stabförmigen Artikels nebeneinander angeordnete Segmente auf.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine Messanordnung zum Messen eines Segmentübergangs und/oder einer Länge eines Segments und/oder eines Vorhandenseins eines Segments eines stabförmigen Artikels der tabakverarbeitenden Industrie;
- Fig. 2a:: einen Ausschnitt aus einer Fördertrommel, in dem ein stabförmiger Artikel in einem Aufnahmebereich angeordnet ist und von einer Beleuchtungsquelle durchleuchtet wird;
- Fig. 2b:: einen Ausschnitt von einer alternativen Ausführungsform einer Fördertrommel, wobei ein stabförmiger Artikel in einem Aufnahmebereich angeordnet ist und von einer Beleuchtungsquelle durchleuchtet wird;
- Fig. 3a:: eine schematische Darstellung eines stabförmigen Artikels, wobei eine Beleuchtungsquelle und eine Kamera benachbart zum stabförmigen Artikel angeordnet sind;
- Fig. 3b:: eine schematische Darstellung eines stabförmigen Artikels, wobei eine Beleuchtungsquelle und eine Kamera benachbart zum stabförmigen Artikel angeordnet sind;
- Fig. 4a:: eine schematische Darstellung eines stabförmigen Artikels, wobei mehrere Beleuchtungsquellen und eine Kamera benachbart zum stabförmigen Artikel angeordnet sind;
- Fig. 4b:: eine schematische Darstellung eines stabförmigen Artikels, wobei mehrere Beleuchtungsquellen benachbart zum stabförmigen Artikel angeordnet sind;
- Fig. 5a:: eine schematische Darstellung einer Spaltanordnung, die zwischen einer Beleuchtungsquelle und einem stabförmigen Artikel angeordnet ist;
- Fig. 5b:: eine schematische Darstellung einer Spaltanordnung und einer Linse, die zwischen einer Beleuchtungsquelle und einem stabförmigen Artikel angeordnet sind;
- Fig. 5c:: eine schematische Darstellung eines stabförmigen Artikels, wobei die Beleuchtungsquelle als Laser ausgebildet ist;
- Fig. 6a:: eine schematische Darstellung eines stabförmigen Artikels, der mittels mehrerer Beleuchtungsquellen, die farbiges Licht unterschiedlicher Farbe aussenden, durchleuchtet wird;
- Fig. 6b:: eine schematische Darstellung eines stabförmigen Artikels, der mittels mehrerer Beleuchtungsquellen, die farbiges Licht unterschiedlicher Farbe aussenden, durchleuchtet wird;
- Fig. 7a:: einen mit der Kamera aufgenommenen und mittels Licht unterschiedlicher Farbe durchleuchteten stabförmigen Artikel, wobei unterschiedliche Farbfilter angewendet werden;
- Fig. 7b:: einen mit der Kamera aufgenommenen mittels Licht unterschiedlicher Farbe durchleuchteten stabförmigen Artikel, wobei unterschiedliche Farbfilter angewendet werden;
- Fig. 8:: ein Flussdiagramm eines Verfahrens zum Messen eines Segmentübergangs und/oder einer Länge eines Segments und/oder eines Vorhandenseins eines Segments eines stabförmigen Artikels der tabakverarbeitenden Industrie.

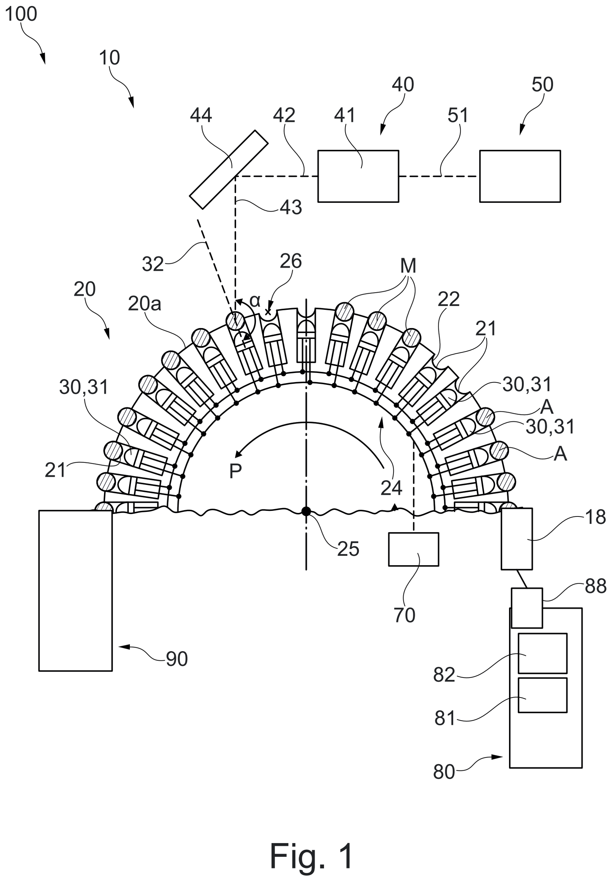

Fig. 1 zeigt eine Messanordnung 10 zum Messen eines Segmentübergangs und/oder einer Länge eines Segments und/oder eines Vorhandenseins eines Segments eines stabförmigen Artikels A der tabakverarbeitenden Industrie. Es sind mehrere stabförmige Artikel A gezeigt, deren Längsachse sich jeweils senkrecht zur Zeichnungsebene erstreckt. Entlang ihrer Längsachse haben die stabförmigen Artikel mehrere nebeneinander angeordnete Segmente.

Die Messanordnung 10 umfasst eine um eine Rotationsachse 25 drehbar gelagerte Fördertrommel 20, die sich in Pfeilrichtung P dreht und die zum queraxialen Fördern der stabförmigen Artikel A ausgebildet ist. Die Fördertrommel 20 weist mehrere entlang des Umfangs der Fördertrommel angeordnete Aufnahmebereiche 21 auf, die zum Halten der stabförmigen Artikel A ausgebildet sind. Die Aufnahmebereiche 20 sind in der Mantelflache 20a der Fördertrommel 20 angeordnet und mit Mulden 22 vorgesehen, die sich parallel zur Rotationsachse 25 und somit in axialer Richtung erstrecken und über den Umfang der Fördertrommel 20 verteilt vorgesehen sind. Dabei sind die Mulden 22 äquidistant voneinander angeordnet, indem die Abstände zwischen jeweils zwei benachbarten Mulden 22 in Umfangs- bzw. Drehrichtung der Fördertrommel 20 gemäß Pfeil P bei allen Mulden 22 gleich sind. Somit handelt es sich bei der Fördertrommel 20 im dargestellten Ausführungsbeispiel um eine Muldentrommel. Sämtliche Mulden 22 weisen Saugluftbohrungen (nicht gezeigt) auf. Diese Saugluftbohrungen bilden das Ende Saugluftkanälen (nicht gezeigt), die innerhalb der Fördertrommel 20 ausgebildet und an eine Saugeinrichtung (nicht gezeigt) angeschlossen sind. Die Aufnahmebereiche 21 mit den Mulden 22 dienen zur Aufnahme der stabförmigen Artikel A mittels Unterdruck, der durch Ansaugen von Luft durch die Saugluftbohrungen erzeugt wird.

Es sind Beleuchtungsvorrichtungen 30 vorgesehen, die jeweils mehrere Beleuchtungsquellen 31 umfassen. Jede der Beleuchtungsvorrichtungen 30 weist mehrere parallel zur Längsachse der stabförmigen Artikel angeordnete Beleuchtungsquellen 31 auf, von denen in dieser Ansicht jeweils nur eine zu sehen ist, da diese Beleuchtungsquellen einer Beleuchtungsvorrichtung 30 jeweils senkrecht zur Zeichnungsebene nebeneinander angeordnet sind. Die Beleuchtungsquellen 31 senden jeweils Licht auf die Mantelflächen M der in den Aufnahmebereichen 21 gehaltenen stabförmigen Artikel A in radialer Richtung der stabförmigen Artikel A durch die stabförmigen Artikel hindurch. Die Aufnahmebereiche 21 weisen Aufnahmeachsen 26 auf, entlang derer sich die Längsachsen der stabförmigen Artikel A erstrecken. Die Beleuchtungsquellen 31 sind ausgebildet, um monochromatisches oder nahezu monochromatisches Licht, das farbig ist, auszusenden. Die Beleuchtungsquellen sind bevorzugt als Leuchtdioden oder Laser ausgebildet. Eine Versorgungsleitung 24 ist im Inneren der Fördertrommel 20 verlegt. An die Versorgungsleitung 24 sind die im dargestellten Ausführungsbeispiel nach Art einer Sammelschiene gemeinsam sämtliche Beleuchtungsquellen 31 angeschlossen. Somit werden die Beleuchtungsquellen im dargestellten Ausführungsbeispiel über die Versorgungsleitung 24 mit einer Betriebsspannung versorgt und angesteuert. Die Steuerung der Beleuchtungsquellen erfolgt mittels der Steuerungseinheit 70.

Es ist eine Bilderfassungsvorrichtung 40 vorgesehen, die von der Fördertrommel 20 beabstandet angeordnet ist und die ausgebildet und angeordnet ist, um Bilder von den Mantelflächen M der in den Aufnahmebereichen 21 angeordneten stabförmigen Artikel A aufzunehmen, während diese von den Beleuchtungsquellen 31 durchleuchtet werden. Die Bilderfassungsvorrichtung weist eine Kamera 41 mit einer Kameraachse 42 auf, die auf einen Spiegel 44 gerichtet ist, von dem aus eine optische Achse 43 in Richtung eines stabförmigen Artikels A gerichtet ist. Die Beleuchtungsquellen 31 der Beleuchtungsvorrichtung 30 weisen Lichtachsen 32 auf, wobei die optische Achse 43 und die Lichtachsen 32 nicht parallel zueinander, sondern derart relativ zueinander angeordnet sind, dass der Winkel α zwischen der optischen Achse 43 der Bilderfassungsvorrichtung 40 und den Lichtachsen 32 der Beleuchtungsquellen 31 kleiner als 180° ist. Auch die Kameraachse 42 und die Lichtachsen 32 sind nicht parallel zueinander ausgerichtet und in einem Winkel von unter 180° zueinander orientiert.

Es ist eine Bildverarbeitungseinheit 50 vorgesehen, die signaltechnisch über die Leitung 51 mit der Bilderfassungsvorrichtung 40 verbunden ist und die ausgebildet ist, um die mittels der Bilderfassungsvorrichtung 40 aufgenommenen Bilder in Abhängigkeit von dem aus dem stabförmigen Artikel A austretenden Licht auszuwerten und Segmentübergänge und/oder Längen von Segmenten und/oder ein Vorhandensein von Segmenten der stabförmigen Artikel A zu ermitteln.

In Fig. 1 ist ferner eine Vorrichtung 100 zur Herstellung eines stabförmigen Artikels A stark schematisch dargestellt. Zusätzlich zur Messanordnung 10 weist die Vorrichtung 100 eine Maschine 80 zur Herstellung von stabförmigen Artikeln A mit einem Abgabebereich 88 zur Abgabe von hergestellten stabförmigen Artikeln A auf. Die Maschine 80 kann insbesondere eine Multisegmentfilterherstellungsmaschine sein, die Multisegmentfilterstäben herstellt. Die Maschine 80 weist eine Zusammenstelleinheit 81 zum Zusammenstellen von Segmenten und eine Umhüllungseinheit 82 zum Umhüllen der zusammengesetzten Segmente mit Umhüllungsmaterial auf. Die Messanordnung 10 hat einen Aufnahmeabschnitt 18 zur Aufnahme der von der Maschine 80 hergestellten stabförmigen Artikel A. Die Vorrichtung 100 kann Teil der Multisegmentfilterherstellungsmaschine sein, dementsprechend werden alle hergestellten Artikel online geprüft. Die Vorrichtung 100 kann aber auch Teil eines offline Prüfturms sein.

Nach dem Beleuchten der stabförmigen Artikel können noch weitere Prüfschritte, insbesondere pneumatischer und/oder optischer Art stattfinden. Dazu kann ein Prüfturm 90 vorgesehen sein, in welchem solche weiteren Prüfschritte vorgenommen werden können.

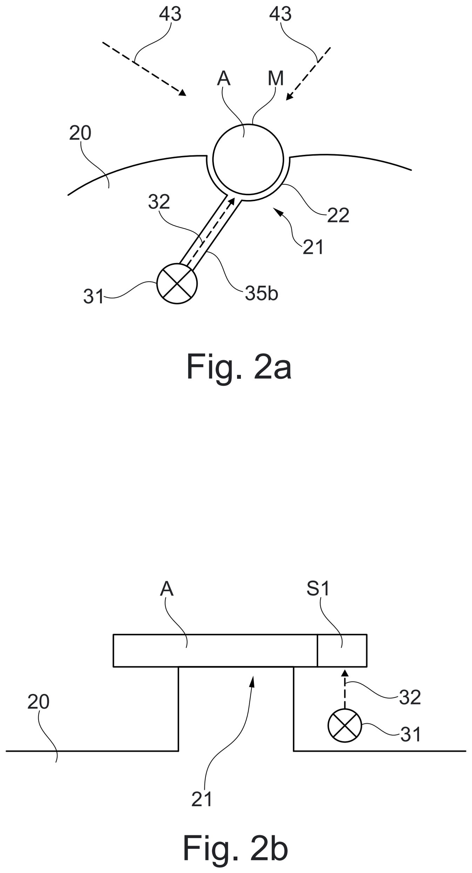

Fig. 2a zeigt einen Ausschnitt aus einer Fördertrommel 20, in dem ein stabförmiger Artikel A in einem Aufnahmebereich 21 in einer Mulde 22 angeordnet ist und von einer Beleuchtungsquelle 31, die Licht entlang der Lichtachse 32 aussendet, das auf die Mantelfläche M des stabförmigen Artikels A trifft, durchleuchtet wird. Zwischen der Beleuchtungsquelle 31 und dem stabförmigen Artikel A ist eine Spaltanordnung 35b vorgesehen, damit eine möglichst punktförmige Beleuchtung des stabförmigen Artikels realisiert werden kann. Die optische Achse 43 der Bilderfassungsvorrichtung kann beispielsweise auf der gegenüberliegenden Seite von der Beleuchtungsquelle 31 bezogen auf den stabförmigen Artikel A angeordnet sein. Es ist aber auch möglich, und hier ebenfalls als Alternative eingezeichnet, dass die optische Achse 43 nicht parallel zum stabförmigen Artikel A angeordnet ist, sondern in einem Winkel von unter 180°, beispielsweise ca. 90°, wie hier gezeigt.

Fig. 2b zeigt einen Ausschnitt von einer alternativen Ausführungsform einer Fördertrommel 20, hier im Längsschnitt gezeigt. Der stabförmige Artikel A weist ein Endsegment S1 auf, unter dem eine Beleuchtungsquelle 31 angeordnet ist. Die Lichtachse 32 ist auf das Endsegment S1 gerichtet. Der Aufnahmebereich 21 ist bei dieser Ausführungsform derart ausgebildet, dass der stabförmige Artikel A sich über die Enden des Aufnahmebereichs 21 hinweg erstreckt, also über den Aufnahmebereich 21 hinausragt. Daher ist es möglich, dass die Beleuchtungsquelle wie dargestellt nicht im oder unter dem Aufnahmebereich 21, sondern daneben angeordnet ist.

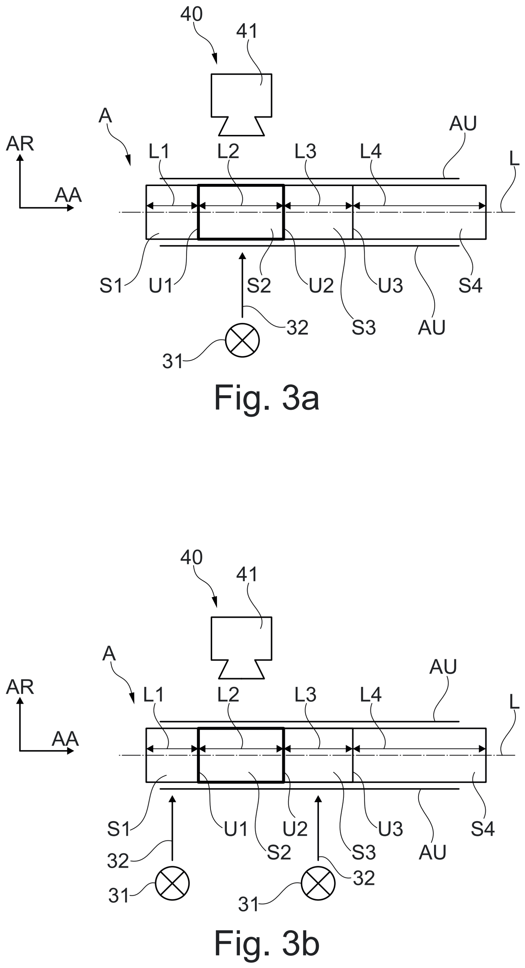

Fig. 3a zeigt eine schematische Darstellung eines stabförmigen Artikels A, wobei eine Beleuchtungsquelle 31 auf der einen Seite und eine Kamera 41 einer Bilderfassungsvorrichtung 40 auf der anderen Seite des stabförmigen Artikels A angeordnet sind. Der stabförmige Artikel A weist eine Längsachse L auf, die sich in axialer Richtung AA des stabförmigen Artikels A erstreckt. Der stabförmige Artikel A weist ferner eine radiale Richtung AR auf, die orthogonal zur axialen Richtung AA ausgerichtet ist. Der stabförmige Artikel A weist vier entlang der axialen Richtung AA nebeneinander angeordnet Segmente S1, S2, S3, S4 auf. Die Segmente S1, S2, S3, S4 sind lichtdurchlässig, sodass das Licht, das von der Beleuchtungsquelle 31 entlang der Lichtachse 32 ausgesendet wird, den stabförmigen Artikel A durchleuchtet und das aus dem stabförmigen Artikel A austretende Licht von der Kamera 41 erfasst werden kann. Die Segmente S1, S2, S3, S4 haben die Längen L1, L2, L3, L4. Zwischen den Segmenten S1, S2, S3, S4 sind Segmentübergänge U1, U2, U3 ausgebildet. Der stabförmige Artikel A weist außerdem ein Umhüllungsmaterial AU auf, das die Segmente S1, S2, S3, S4 entlang des Umfangs der Segmente umhüllt.

Fig. 3b zeigt eine schematische Darstellung eines stabförmigen Artikels A, der wie der in Fig. 3a gezeigte stabförmige Artikel A ausgebildet ist, mit dem Unterschied, dass das Segment S2 ein lichtundurchlässiges Segment ist und die Beleuchtungsvorrichtung anders aufgebaut ist. Es sind nämlich zwei Beleuchtungsquellen 31 vorgesehen, die auf die Segmente S1 und S3 gerichtet sind. Anhand des aus dem stabförmigen Artikel austretenden Lichts können die Längen L1, L2, L3 und die Segmentübergänge U1, U2 ermittelt werden, obwohl das Segment S2 lichtundurchlässig ist.

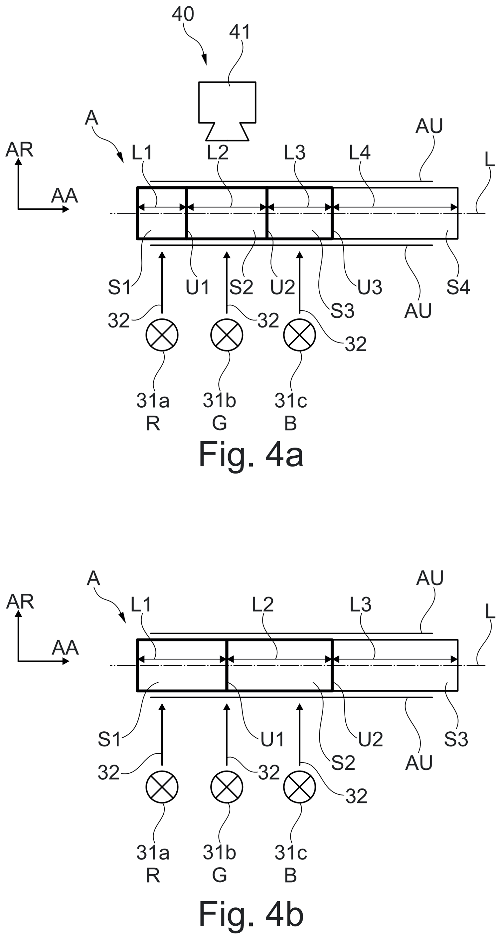

Fig. 4a zeigt eine schematische Darstellung eines stabförmigen Artikels A, wobei mehrere Beleuchtungsquellen 31a, 31b, 31c auf der einen Seite und eine Kamera 41 einer Bilderfassungsvorrichtung 40 auf der anderen Seite des stabförmigen Artikels A angeordnet sind. Die Beleuchtungsquelle 31a sendet rotes Licht aus, beispielsweise mittels einer LED, die ausgebildet ist, um rotes Licht auszusenden. Die Beleuchtungsquelle 31b sendet grünes Licht aus, beispielsweise mittels einer LED, die ausgebildet ist, um grünes Licht auszusenden. Die Beleuchtungsquelle 31c sendet blaues Licht aus, beispielsweise mittels einer LED, die ausgebildet ist, um blaues Licht auszusenden. Die Segmente S1, S2, S3, S4 sind lichtdurchlässig, sodass das Licht, das von den Beleuchtungsquellen 31a, 31b, 31c entlang der Lichtachsen 32 ausgesendet wird, den stabförmigen Artikel A durchleuchtet und das aus dem stabförmigen Artikel A austretende, verschiedenfarbige Licht von der Kamera 41 erfasst werden kann. Aufgrund der mehreren Beleuchtungsquellen und der unterschiedlichen Farben des Lichts, können die Längen L1, L2, L3 der Segmente und die Segmentübergänge U1, U2, U3 besonders genau und zuverlässig ermittelt werden.

Fig. 4b zeigt eine schematische Darstellung eines stabförmigen Artikels A, der drei Segmente S1, S2, S3 aufweist. Es sind drei wie im Zusammenhang mit Fig. 4b beschriebene Beleuchtungsquellen 31a, 31b, 31c vorgesehen. Aufgrund der Längen L1, L2, L3 der Segmente S1, S2, S3 ist eine Lichtachse 32 der Beleuchtungsquellen, nämlich die Lichtachse 32 der Beleuchtungsquelle 31b, nicht auf eines der Segmente, sondern auf den Segmentübergang U1 ausgerichtet. Da allerdings die Lichtachsen 32 der zwei weiteren Beleuchtungsquellen 31a und 31c auf die benachbarten Segmente S1 und S2 ausgerichtet sind, können trotzdem zuverlässig und genau die Längen L1, L2 der Segmente und die Segmentübergänge U1, U2 ermittelt werden.

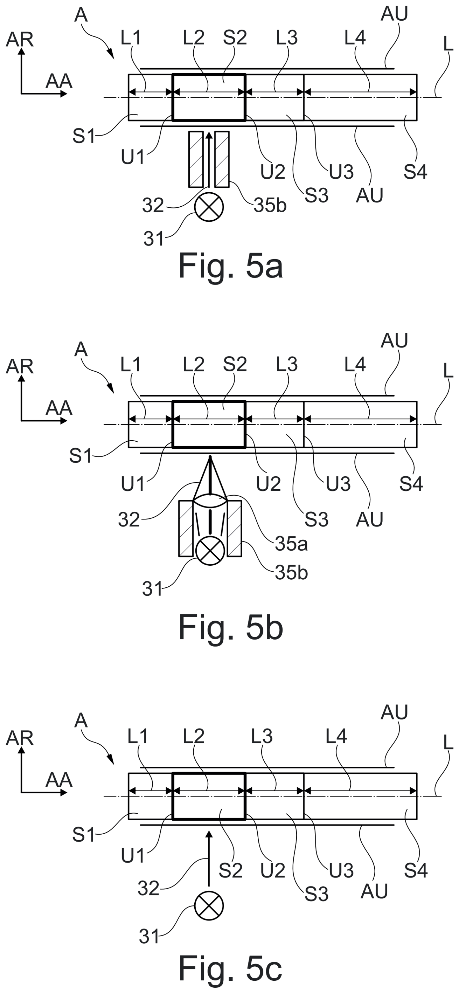

Fig. 5a zeigt eine schematische Darstellung einer Spaltanordnung 35b, die zwischen einer Beleuchtungsquelle 31 und einem stabförmigen Artikel A angeordnet ist. Mittels der Spaltanordnung 35b kann eine nahezu punkt- oder linienförmige Beleuchtung des Segments S2 erreicht werden.

Fig. 5b zeigt eine schematische Darstellung einer Spaltanordnung 33b und einer Linse 35a, die zwischen einer Beleuchtungsquelle 31 und einem stabförmigen Artikel A angeordnet sind. Mittels der Linse 35a kann das Licht entlang der Lichtachse 32 fokussiert werden, wodurch eine nahezu punkt- oder linienförmige Beleuchtung des Segments S2 erreicht werden kann.

Fig. 5c eine schematische Darstellung eines stabförmigen Artikels, wobei die Beleuchtungsquelle als Laser ausgebildet ist. Ein Laser als Beleuchtungsquelle hat den Vorteil, dass das aus dem Laser austretende Licht bereits nahezu parallel entlang der Lichtachse 32 austritt und so eine nahezu punktförmige Beleuchtung des Segments S2 möglich ist, ohne, dass eine Spaltanordnung und/oder eine Linse zur Fokussierung des Lichts notwendig ist.

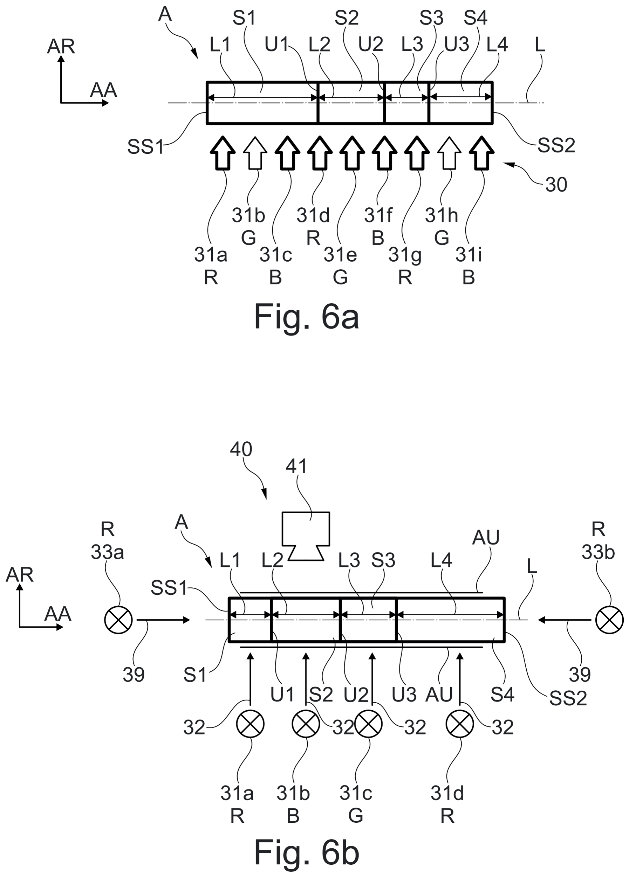

Fig. 6a zeigt eine schematische Darstellung eines stabförmigen Artikels A, der mittels mehrerer Beleuchtungsquellen 31a, 31b, 31c, 31d, 31e, 31f 31g, 31h, 31i, die Licht unterschiedlicher Farbe aussenden, durchleuchtet wird. Die Beleuchtungsquellen 31a, 31d, 31g senden rotes Licht aus (daher die Bezeichnung R). Die Beleuchtungsquellen 31b, 31e, 31h senden grünes Licht aus (daher die Bezeichnung G). Die Beleuchtungsquellen 31c, 31f, 31i senden blaues Licht aus (daher die Bezeichnung B).

Fig. 6b zeigt eine schematische Darstellung eines stabförmigen Artikels A, der mittels mehrerer Beleuchtungsquellen 31a, 31b, 31c, 31d, die Licht unterschiedlicher Farbe aussenden, durchleuchtet wird. Die Beleuchtungsquellen 31a und 31d senden rotes Licht aus (daher die Bezeichnung R). Die Beleuchtungsquelle 31b sendet grünes Licht aus (daher die Bezeichnung G). Die Beleuchtungsquelle 31c sendet blaues Licht aus (daher die Bezeichnung B). Jedem Segment S1, S2, S3, S4 ist genau eine Beleuchtungsquelle 31a, 31b, 31c, 31d zugeordnet. Dadurch wird erreicht, dass jedes Segment mit Licht genauer einer bestimmten Farbe durchleuchtet wird, wodurch eine besonders gute Unterscheidbarkeit zwischen den Segmenten erreicht werden kann. Außerdem ist in Fig. 6b zusätzlich eine erste seitliche Beleuchtungsquelle 33a vorgesehen, die ausgebildet und angeordnet ist, um rotes Licht entlang der Lichtachse 39 auf eine erste Stirnseite SS1 des stabförmigen Artikels A in axialer Richtung AA des stabförmigen Artikels A durch den stabförmigen Artikel A hindurchzusenden. Ferner ist eine zweite seitliche Beleuchtungsquelle 33b vorgesehen, die ausgebildet und angeordnet ist, um rotes Licht entlang der Lichtachse 39 auf eine zweite Stirnseite SS2 des stabförmigen Artikels A in axialer Richtung AA des stabförmigen Artikels A durch den stabförmigen Artikel A hindurchzusenden. Durch diese zusätzliche Beleuchtung der Stirnseiten des stabförmigen Artikels kann eine besonders gute Messung durch eine besonders gute Abgrenzbarkeit der Endsegmente S1 und S4 erreicht werden.

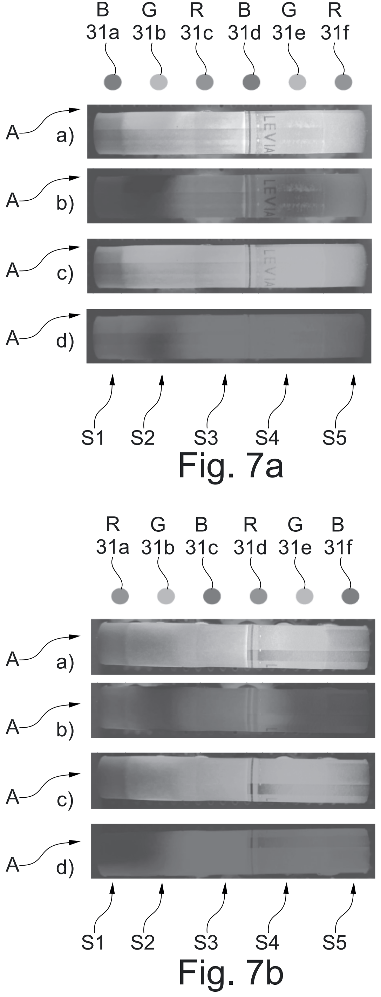

Fig. 7a zeigt einen mit der Kamera aufgenommenen und mittels Licht unterschiedlicher Farbe durchleuchteten stabförmigen Artikel, wobei unterschiedliche Farbfilter angewandt werden. Bild a) zeigt ein Bild des mittels der Beleuchtungsquellen 31a, 31b, 31c, 31d, 31e, 31d durchleuchteten stabförmigen Artikels A. Es ist erkennbar, dass aufgrund der unterschiedlichen Farben des Lichts der Beleuchtungsquellen (B steht für blau, G steht für grün, R steht für rot), die Segmente S1, S2, S3, S4, S5 in unterschiedlichen Farben dargestellt sind, wodurch die Segmente besonders gut voneinander unterschieden werden können. Im Bild b) wurde ein Rotfilter angewandt, sodass nur die Anteile des roten Lichts des Bildes a) gezeigt werden. Im Bild c) wurde ein Grünfilter angewandt, sodass nur die Anteile des grünen Lichts des Bildes a) gezeigt werden. Im Bild d) wurde ein Blaufilter angewandt, sodass nur die Anteile des blauen Lichts des Bildes a) gezeigt werden.

Fig. 7b zeigt - wie in Fig. 7a - einen mit der Kamera aufgenommenen und mittels Licht unterschiedlicher Farbe durchleuchteten stabförmigen Artikel, wobei unterschiedliche Farbfilter angewandt werden. Der einzige Unterschied im Vergleich zu Fig. 7a besteht darin, dass die Farben der Beleuchtungsquellen anders angeordnet sind.

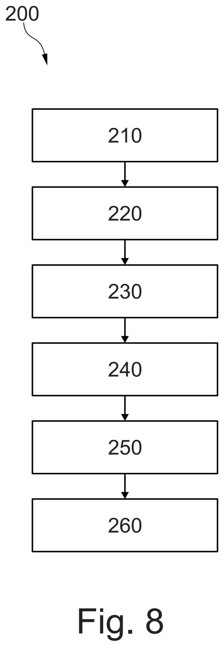

Fig. 8 zeigt ein Flussdiagramm eines beispielhaften Verfahrens 200 zum Messen eines Segmentübergangs U1, U2, U3 und/oder einer Länge L1, L2, L3, L4 eines Segments S1, S2, S3, S4 und/oder eines Vorhandenseins eines Segments S1, S2, S3, S4 eines stabförmigen Artikels A der tabakverarbeitenden Industrie. Das Verfahren 200 umfasst die folgenden Schritte: In einem Schritt 210, Bereitstellen einer wie im Zusammenhang mit den Figuren 1-7 beschriebenen Messanordnung 10. In einem Schritt 220, Queraxiales Fördern eines stabförmigen Artikels A der tabakverarbeitenden Industrie, der eine Längsachse L und mehrere, vorzugsweise mindestens drei oder mindestens vier oder mindestens sieben, entlang der Längsachse L des stabförmigen Artikels A nebeneinander angeordnete Segmente S1, S2, S3, S4 aufweist. In einem Schritt 230, Beleuchten des stabförmigen Artikels A mittels mehrerer Beleuchtungsquellen einer Beleuchtungsvorrichtung, wobei die Beleuchtungsquellen monochromatisches oder nahezu monochromatisches Licht, das farbig ist, auf eine Mantelfläche M des stabförmigen Artikels A durch den stabförmigen Artikel hindurchsenden. In einem Schritt 240, Aufnehmen eines Bildes von der Mantelfläche M des durchleuchteten stabförmigen Artikels A. In einem Schritt 250, Auswerten des aufgenommenen Bildes in Abhängigkeit von dem aus dem stabförmigen Artikel A austretenden Licht. In einem Schritt 260, und Ermitteln eines Segmentübergangs U1, U2, U3, U4 und/oder einer Länge L1, L2, L3, L4 eines Segments S1, S2, S3, S4 und/oder eines Vorhandenseins eines Segments S1, S2, S3, S4 des stabförmigen Artikels A.

### Bezugszeichenliste

- 10: Messanordnung zum Messen eines Segmentübergangs und/oder einer Länge eines Segments und/oder eines Vorhandenseins eines Segments eines stabförmigen Artikels
- 18: Aufnahmeabschnitt
- 20: Fördertrommel
- 20a: Mantelflache
- 21: Aufnahmebereiche
- 22: Mulde
- 24: Versorgungsleitung
- 25: Rotationsachse
- 26: Aufnahmeachse
- 30: Beleuchtungsvorrichtung
- 31, 31a-i: Beleuchtungsquellen
- 32: Lichtachse der Beleuchtungsquellen
- 33a, 33b: seitliche Beleuchtungsquellen
- 33b: Spaltanordnung
- 35a: Linse
- 35b: Spaltanordnung
- 39: Lichtachse der seitlichen Beleuchtungsquellen
- 40: Bilderfassungsvorrichtung
- 41: Kamera
- 42: Kameraachse
- 43: optische Achse
- 44: Spiegel
- 50: Bildverarbeitungseinheit
- 51: Leitung
- 70: Steuerungseinheit
- 80: Maschine
- 81: Zusammenstelleinheit
- 82: Umhüllungseinheit
- 88: Abgabebereich
- 90: Prüfturm
- 100: Vorrichtung zur Herstellung eines stabförmigen Artikels
- 200: Verfahren zum Messen eines Segmentübergangs und/oder einer Länge eines Segments und/oder eines Vorhandenseins eines Segments eines stabförmigen Artikels
- 210-260: Verfahrensschritte
- A: stabförmiger Artikel der tabakverarbeitenden Industrie
- AA: axiale Richtung des stabförmigen Artikels
- AR: radiale Richtung des stabförmigen Artikels
- AU: Umhüllungsmaterial des stabförmigen Artikels
- R: rotes Licht
- G: grünes Licht
- B: blaues Licht
- L: Längsachse des stabförmigen Artikels
- M: Mantelfläche des stabförmigen Artikels
- P: Pfeilrichtung, die Drehrichtung der Fördertrommel angibt

## Patentansprüche

1. Messanordnung (10) zum Messen eines Segmentübergangs (U1, U2, U3) und/oder einer Länge (L1, L2, L3, L4) eines Segments (S1, S2, S3, S4) und/oder eines Vorhandenseins eines Segments (S1, S2, S3, S4) eines stabförmigen Artikels (A) der tabakverarbeitenden Industrie, der eine Längsachse (L) und mehrere, vorzugsweise mindestens drei oder mindestens vier oder mindestens sieben, entlang der Längsachse (L) des stabförmigen Artikels (A) nebeneinander angeordnete Segmente (S1, S2, S3, S4) aufweist, die Messanordnung (10) umfassend:
- eine um eine Rotationsachse (25) drehbar gelagerte Fördertrommel (20), die zum queraxialen Fördern von stabförmigen Artikeln (A) ausgebildet ist, wobei die Fördertrommel (20) einen Aufnahmebereich (21) aufweist, der zum Halten eines stabförmigen Artikels (A) ausgebildet ist,
- eine Beleuchtungsvorrichtung (30), umfassend mehrere Beleuchtungsquellen (31), die ausgebildet und angeordnet sind, um Licht auf eine Mantelfläche (M) eines in dem Aufnahmebereich (21) gehaltenen stabförmigen Artikels (A) in radialer Richtung (AR) des stabförmigen Artikels (A) durch den stabförmigen Artikel hindurchzusenden, wobei mindestens eine der Beleuchtungsquellen (31) ausgebildet ist, um monochromatisches oder nahezu monochromatisches und/oder farbiges Licht oder dichromatisches oder nahezu dichromatisches und/oder farbiges Licht auszusenden,
- eine Bilderfassungsvorrichtung (40), die von der Fördertrommel (20) beabstandet angeordnet ist und die ausgebildet und angeordnet ist, um ein Bild von der Mantelfläche (M) eines in dem Aufnahmebereich (21) angeordneten stabförmigen Artikels (A) aufzunehmen, die mittels der Beleuchtungsquellen (31) durch den stabförmigen Artikel (A) gesendeten Lichts durchleuchtet wird,
- eine Bildverarbeitungseinheit (50), die signaltechnisch mit der Bilderfassungsvorrichtung (40) verbunden ist und die ausgebildet ist, um das mittels der Bilderfassungsvorrichtung (40) aufgenommene Bild in Abhängigkeit von dem aus dem stabförmigen Artikel (A) austretenden Licht auszuwerten und einen Segmentübergang (U1, U2, U3) und/oder eine Länge (L1, L2, L3, L4) eines Segments (S1, S2, S3, S4) und/oder ein Vorhandensein eines Segments (S1, S2, S3, S4) eines stabförmigen Artikels (A) zu ermitteln.

2. Messanordnung nach dem vorhergehenden Anspruch,
wobei die Beleuchtungsquellen (31) ausgebildet sind, um monochromatisches oder nahezu monochromatisches Licht auszusenden, wobei vorzugsweise die Beleuchtungsquellen (31) als Leuchtdioden oder Laser ausgebildet sind.

3. Messanordnung nach einem der vorhergehenden Ansprüche,
wobei die Beleuchtungsvorrichtung (30) eine erste Beleuchtungsquelle (31a) und eine zweite Beleuchtungsquelle (31b) umfasst, die ausgebildet sind, um monochromatisches oder nahezu monochromatisches Licht unterschiedlicher Farbe auszusenden, wobei bevorzugt benachbart angeordnete Beleuchtungsquellen unterschiedliche Farben aufweisen,
wobei vorzugsweise die Beleuchtungsvorrichtung (30) eine dritte Beleuchtungsquelle (31c) umfasst, die ausgebildet ist, um monochromatisches oder nahezu monochromatisches Licht mit einer anderen Farbe als das Licht der ersten Beleuchtungsquelle und/oder das Licht der zweiten Beleuchtungsquelle auszusenden, wobei bevorzugt benachbart angeordnete Beleuchtungsquellen unterschiedliche Farben aufweisen.

4. Messanordnung nach einem der vorhergehenden Ansprüche,
wobei mindestens eine der Beleuchtungsquellen (31) ausgebildet ist, um grünes Licht auszusenden, und/oder wobei mindestens eine der Beleuchtungsquellen (31) ausgebildet ist, um rotes Licht auszusenden, und/oder wobei mindestens eine der Beleuchtungsquellen (31) ausgebildet ist, um blaues Licht auszusenden, und/oder wobei die Beleuchtungsquellen (31) höchstens 20 mm, vorzugsweise höchstens 15 mm, besonders bevorzugt höchstens 10 mm, insbesondere höchstens 5 mm, voneinander beabstandet angeordnet sind, und/oder
wobei die Beleuchtungsvorrichtung (31) mindestens drei, vorzugsweise mindestens vier, besonders bevorzugt mindestens fünf, insbesondere mindestens sechs, nebeneinander angeordnete Beleuchtungsquellen aufweist.

5. Messanordnung nach einem der vorhergehenden Ansprüche,
wobei die Beleuchtungsvorrichtung (30) zusätzlich eine erste seitliche Beleuchtungsquelle (33a) aufweist, die ausgebildet und angeordnet ist, um, vorzugsweise monochromatisches oder nahezu monochromatisches, Licht auf eine erste Stirnseite (SS1) eines in dem Aufnahmebereich gehaltenen stabförmigen Artikels (A) in axialer Richtung (AA) des stabförmigen Artikels (A) durch den stabförmigen Artikel (A) hindurchzusenden,
wobei vorzugsweise die Beleuchtungsvorrichtung (30) zusätzlich eine zweite seitliche Beleuchtungsquelle (33b) aufweist, die ausgebildet und angeordnet ist, um, vorzugsweise monochromatisches oder nahezu monochromatisches, Licht auf eine der ersten Stirnseite gegenüberliegende zweite Stirnseite (SS2) eines in dem Aufnahmebereich (21) gehaltenen stabförmigen Artikels (A) in axialer Richtung des stabförmigen Artikels durch den stabförmigen Artikel hindurchzusenden.

6. Messanordnung nach einem der vorhergehenden Ansprüche,
wobei die Beleuchtungsvorrichtung (30) eine Lichtbündelungsvorrichtung (35), vorzugsweise umfassend eine Linse (35a) und/oder eine Spaltanordnung (35b) aufweist, und/oder
wobei die Beleuchtungsvorrichtung (30) ausgebildet ist, um jedes zweite Segment (S1, S2, S3, S4) eines stabförmigen Artikels (A) zu beleuchten, und/oder wobei jede der Beleuchtungsquellen (31) der Beleuchtungsvorrichtung (30) einem Segment (S1, S2, S3, S4) des zu vermessenden stabförmigen Artikels (A) zugeordnet ist, und/oder
wobei die Beleuchtungsquellen nebeneinander entlang einer Geraden, die parallel zur Aufnahmeachse verläuft, angeordnet sind.

7. Messanordnung nach einem der vorhergehenden Ansprüche,
wobei die Beleuchtungsvorrichtung (30) mittels einer Steuerungseinheit (70) steuerbar ist, wobei die Beleuchtungsquellen (31) der Beleuchtungsvorrichtung (30) in Abhängigkeit von den Segmentlängen (L1, L2, L3, L4) der zu vermessenden stabförmigen Artikel (A) gesteuert werden, wobei vorzugsweise mindestens eine der Beleuchtungsquellen (31) in Abhängigkeit von den Segmentlängen (L1, L2, L3, L4) der zu vermessenden stabförmigen Artikel (A) angeschaltet wird und mindestens eine der Beleuchtungsquellen (31) in Abhängigkeit von den Segmentlängen (L1, L2, L3, L4) der zu vermessenden stabförmigen Artikel (A) ausgeschaltet wird.

8. Messanordnung nach einem der vorhergehenden Ansprüche,
wobei die Fördertrommel (20) mehrere entlang des Umfangs der Fördertrommeln angeordnete Aufnahmebereiche (21) aufweist,
wobei die Messanordnung (10) mehrere Beleuchtungsvorrichtungen (30) aufweist, die jeweils einem der Aufnahmebereiche (21) zugeordnet und/oder jeweils an einem der Aufnahmebereiche (21) angeordnet sind.

9. Messanordnung nach einem der vorhergehenden Ansprüche,
wobei die Bilderfassungsvorrichtung (40) eine Kamera (41), vorzugsweise eine Farbkamera, besonders bevorzugt eine RGB-Kamera, umfasst, wobei die Kamera vorzugsweise mindestens einen Farbfilter aufweist,
wobei die Bilderfassungsvorrichtung (40) vorzugsweise einen Spiegel (44) zum Umlenken des aus dem zu vermessenden stabförmigen Artikel (A) austretenden Lichts in Richtung der Kamera (41) aufweist, und/oder
wobei die Bilderfassungsvorrichtung (40) eine optische Achse (43) aufweist und die Beleuchtungsquellen (31) der Beleuchtungsvorrichtung (30) Lichtachsen (32) aufweisen, wobei Bilderfassungsvorrichtung (40) und die Beleuchtungsquellen (31) der Beleuchtungsvorrichtung (30) nicht parallel zueinander, sondern derart relativ zueinander angeordnet sind, dass der Winkel (α) zwischen der optischen Achse (43) der Bilderfassungsvorrichtung (40) und der Lichtachsen (32) der Beleuchtungsquellen (31) kleiner als 180°, vorzugsweise kleiner als 120°, besonders bevorzugt kleiner als 100°, insbesondere kleiner als 90°, ist.

10. Messanordnung nach einem der vorhergehenden Ansprüche,
wobei die Bildverarbeitungseinheit (50) ausgebildet ist, um das mittels der Bilderfassungsvorrichtung (40) aufgenommene Bild in Abhängigkeit von unterschiedlich farbigem Licht auszuwerten, und insbesondere anhand des unterschiedlich farbigen Lichts einen Segmentübergang (U1, U2, U3) und/oder eine Länge (L1, L2, L3, L4) eines Segments (S1, S2, S3, S4) und/oder ein Vorhandensein eines Segments (S1, S2, S3, S4) eines stabförmigen Artikels (A) zu ermitteln, und/oder wobei die Bildverarbeitungseinheit (50) ausgebildet ist, um das Vorhandensein eines Segments (S1, S2, S3, S4) in Abhängigkeit von einer gemessenen Lichtintensität zu ermitteln, und/oder
wobei die Bildverarbeitungseinheit (50) ausgebildet ist, um einen Segmentübergang (U1, U2, U3) in Abhängigkeit von einem ermittelten Lichtintensitätssprung zu ermitteln, und/oder
wobei die Bildverarbeitungseinheit (50) ausgebildet ist, um die mittels der Bilderfassungsvorrichtung (40) aufgenommenen Bilder mit selektiv gewählten Farbkanälen, vorzugsweise mit mindestens zwei, besonders bevorzugt mindestens drei Farbkanälen, insbesondere rot, grün und blau, zu analysieren.

11. Messanordnung nach einem der vorhergehenden Ansprüche,
wobei der Aufnahmebereich (21) eine Aufnahmeachse (26) aufweist, entlang derer sich beim Halten eines stabförmigen Artikels (A) im Aufnahmebereich (21) die Längsachse (L) des stabförmigen Artikels (A) erstreckt, wobei die Aufnahmeachse (26) sich parallel zur Rotationsachse (25) der Fördertrommel (20) erstreckt.

12. Messanordnung nach einem der vorhergehenden Ansprüche,
wobei die Fördertrommel (20) mindestens eine nach außen offene Mulde (22) zur Aufnahme eines stabförmigen Artikels (A), vorzugsweise mehrere nach außen offene Mulden (22) zur Aufnahme stabförmiger Artikel, aufweist,
wobei vorzugsweise die Beleuchtungsquellen (31) in der Mulde (22) und/oder in einer unterhalb der Mulde (22) vorgesehenen und mit der Mulde (22) kommunizierenden Vertiefung angeordnet ist, wobei die Mulde (22) und die Beleuchtungsquellen (31) so angeordnet sind, dass bei Aufnahme eines stabförmigen Artikels (A) in der Mulde (22) die Beleuchtungsquellen (31) und der stabförmige Artikel (A) in etwa in radialer Ausrichtung bezogen auf die Rotationsachse (25) der Fördertrommel (20) zueinander angeordnet sind.

13. Vorrichtung (100) zur Herstellung eines stabförmigen Artikels (A) der tabakverarbeitenden Industrie, der eine Längsachse (L) und mehrere, vorzugsweise mindestens drei oder mindestens vier oder mindestens sieben, entlang der Längsachse nebeneinander angeordnete Segmente (S1, S2, S3, S4) aufweist, die Vorrichtung (100) umfassend:
- eine Maschine (80) zur Herstellung von stabförmigen Artikeln (A) mit einem Abgabebereich (88) zur Abgabe von hergestellten stabförmigen Artikeln (A), vorzugsweise eine Multisegmentfilterherstellungsmaschine mit einem Abgabebereich (88) zur Abgabe von hergestellten Multisegmentfilterstäben, und
- eine Messanordnung (10) nach einem der vorhergehenden Ansprüche, wobei die Messanordnung (10) einen Aufnahmeabschnitt (18) zur Aufnahme der von der Maschine (80) zur Herstellung von stabförmigen Artikeln (A) hergestellten stabförmigen Artikel (A) aufweist.

14. Verfahren (200) zum Messen eines Segmentübergangs (U1, U2, U3) und/oder einer Länge (L1, L2, L3, L4) eines Segments (S1, S2, S3, S4) und/oder eines Vorhandenseins eines Segments (S1, S2, S3, S4) eines stabförmigen Artikels (A) der tabakverarbeitenden Industrie, das Verfahren (200) umfassend:
- Bereitstellen (210) einer Messanordnung (10), vorzugsweise einer Messanordnung nach einem der Ansprüche 1-12, zum Messen eines Segmentübergangs (U1, U2, U3) und/oder einer Länge (L1, L2, L3, L4) eines Segments (S1, S2, S3, S4) und/oder eines Vorhandenseins eines Segments (S1, S2, S3, S4) eines stabförmigen Artikels (A) der tabakverarbeitenden Industrie,
- Queraxiales (220) Fördern eines stabförmigen Artikels (A) der tabakverarbeitenden Industrie, der eine Längsachse (L) und mehrere, vorzugsweise mindestens drei oder mindestens vier oder mindestens sieben, entlang der Längsachse (L) des stabförmigen Artikels (A) nebeneinander angeordnete Segmente (S1, S2, S3, S4) aufweist,
- Beleuchten (230) des stabförmigen Artikels (A) mittels mehrerer Beleuchtungsquellen einer Beleuchtungsvorrichtung, wobei die Beleuchtungsquellen monochromatisches oder nahezu monochromatisches und/oder farbiges Licht oder dichromatisches oder nahezu dichromatisches und/oder farbiges Licht auf eine Mantelfläche (M) des stabförmigen Artikels (A) durch den stabförmigen Artikel hindurchsenden,
- Aufnehmen (240) eines Bildes von der Mantelfläche (M) des durchleuchteten stabförmigen Artikels (A),
- Auswerten (250) des aufgenommenen Bildes in Abhängigkeit von dem aus dem stabförmigen Artikel (A) austretenden Licht, und
- Ermitteln (260) eines Segmentübergangs (U1, U2, U3, U4) und/oder einer Länge (L1, L2, L3, L4) eines Segments (S1, S2, S3, S4) und/oder eines Vorhandenseins eines Segments (S1, S2, S3, S4) des stabförmigen Artikels (A).

15. Verfahren nach Anspruch 14,
wobei unter jedem Segment (S1, S2, S3, S4) des stabförmigen Artikels (A) mindestens eine Beleuchtungsquelle (31) angeordnet ist und/oder wobei jedem Segment (S1, S2, S3, S4) des stabförmigen Artikels (A) eine, bevorzugt eigene, Beleuchtungsquelle (31) zugeordnet ist, und/oder
wobei die Beleuchtungsquellen (31) in Abhängigkeit von der Anordnung und/oder der Länge (L1, L2, L3, L4) der Segmente (S1, S2, S3, S4) des stabförmigen Artikels (A) angesteuert werden.

16. Verfahren nach einem der Ansprüche 14-15,
wobei mindestens eines der Segmente (S1, S2, S3, S4) des stabförmigen Artikels (A) ein Filtersegment ist, wobei vorzugsweise alle Segmente (S1, S2, S3, S4) des stabförmigen Artikels (A) Filtersegmente sin, und/oder
wobei vor dem Beleuchten (230) des stabförmigen Artikels (A) mittels der Beleuchtungsquellen (31) die Segmente (S1, S2, S3, S4) des stabförmigen Artikels (A) mittels einer Zusammenstelleinheit (81) zusammengesetzt werden und vorzugsweise die zusammengesetzten Segmente (S1, S2, S3, S4) mittels eines Umhüllungsmaterials (AU), insbesondere eines Umhüllungspapiers, mittels einer Umhüllungseinheit (82) umhüllt werden, und/oder
wobei nach dem Beleuchten (230) des stabförmigen Artikels (A) mittels der Beleuchtungsquellen (31) der stabförmige Artikel (A) weiteren Prüfschritten, insbesondere mittels pneumatischer und/oder optischer und/oder mikrowellentechnischer Prüfung, unterzogen wird, und/oder wobei das aufgenommene Bild in Abhängigkeit von unterschiedlich farbigem Licht ausgewertet wird,
wobei vorzugsweise anhand des unterschiedlich farbigen Lichts ein Segmentübergang (U1, U2, U3) und/oder eine Länge (L1, L2, L3, L4) eines Segments (S1, S2, S3, S4) und/oder ein Vorhandensein eines Segments (S1, S2, S3, S4) eines stabförmigen Artikels (A) ermittelt wird.

17. Verwendung einer Messanordnung (10) nach einem der Ansprüche 1-12, zum Messen eines Segmentübergangs (U1, U2, U3) und/oder einer Länge (L1, L2, L3, L4) eines Segments (S1, S2, S3, S4) und/oder eines Vorhandenseins eines Segments (S1, S2, S3, S4) eines stabförmigen Artikels (A) der tabakverarbeitenden Industrie, insbesondere in Form eines stabförmigen Artikels (A) für erhitzte Tabakerzeugnisse oder in Form einer Multisegmentzigarette oder in Form eines Multifiltersegments, wobei der stabförmige Artikel (A) vorzugsweise mindestens drei oder mindestens vier oder mindestens sieben, entlang der Längsachse (L) des stabförmigen Artikels (A) nebeneinander angeordnete Segmente (S1, S2, S3, S4) aufweist.
